(19) Europäisches Patentamt
European Patent Office
Office européen des brevets

(11) **EP 3 548 836 B1**

(12) **EUROPÄISCHE PATENTSCHRIFT**

(45) Veröffentlichungstag und Bekanntmachung des Hinweises auf die Patenterteilung:
**20.04.2022 Patentblatt 2022/16**

(21) Anmeldenummer: **17787400.5**

(22) Anmeldetag: **20.10.2017**

(51) Internationale Patentklassifikation (IPC):
**G01B 11/06** (2006.01)  **G02B 21/24** (2006.01)
**G06T 7/55** (2017.01)  **G01B 11/02** (2006.01)

(52) Gemeinsame Patentklassifikation (CPC):
**G01B 11/0608; G01B 11/026; G02B 21/06;
G02B 21/245; G02B 21/367; G06T 7/74;**
G06T 2207/10056; G06T 2207/10152;
G06T 2207/30024

(86) Internationale Anmeldenummer:
**PCT/EP2017/076892**

(87) Internationale Veröffentlichungsnummer:
**WO 2018/099652 (07.06.2018 Gazette 2018/23)**

(54) **BESTIMMUNG DER ANORDNUNG EINES PROBENOBJEKTS MITTELS WINKELSELEKTIVER BELEUCHTUNG**

DETERMINING THE ARRANGEMENT OF A SAMPLE OBJECT BY MEANS OF ANGLE-SELECTIVE ILLUMINATION

DÉTERMINATION DE L'AGENCEMENT D'UN OBJET ÉCHANTILLON PAR ÉCLAIRAGE ANGULAIRE SÉLECTIF

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **30.11.2016 DE 102016123154**

(43) Veröffentlichungstag der Anmeldung:
**09.10.2019 Patentblatt 2019/41**

(73) Patentinhaber: **Carl Zeiss Microscopy GmbH
07745 Jena (DE)**

(72) Erfinder:
• **STOPPE, Lars
07743 Jena (DE)**
• **OHRT, Thomas
07751 Golmsdorf (DE)**
• **STICKER, Markus
07749 Jena (DE)**

(74) Vertreter: **Neusser, Sebastian
Kraus & Weisert
Patentanwälte PartGmbB
Thomas-Wimmer-Ring 15
80539 München (DE)**

(56) Entgegenhaltungen:
**DE-A1- 3 328 821  DE-A1-102009 012 248
DE-A1-102014 109 687**

## Beschreibung

TECHNISCHES GEBIET

Die Erfindung betrifft im Allgemeinen Techniken zum Berechnen einer Anordnung eines Probenobjekts in einer optischen Vorrichtung durch Beleuchten des Probenobjekts aus unterschiedlichen Beleuchtungsrichtungen. Dabei wird eine Korrelation zwischen Daten durchgeführt, die den unterschiedlichen Beleuchtungsrichtungen entsprechen.

HINTERGRUND

Aus der DE 10 2014 109 687 A1 sind Techniken bekannt, um ein Probenobjekt aus unterschiedlichen Beleuchtungsrichtungen zu beleuchten (winkelselektive Beleuchtung oder strukturierte Beleuchtung). Derart erhaltene Bilder können anschließend digital verarbeitet oder analysiert werden. Dadurch können zusätzliche Informationen erhalten werden, beispielsweise der Abstand des Probenobjekts von einer Fokusebene einer entsprechenden optischen Vorrichtung.

Aus der DE 10 2009 012248 A1 ist zudem eine Technik bekannt, um ein Probenobjekt aus zwei Beleuchtungsrichtungen für verschiedene Fokusabstände einer optischen Vorrichtung zu beleuchten, Bilder unter verschiedenen Beleuchtungsrichtungen aufzunehmen und die Fokusebene der Vorrichtung mittels Autokorrelation der Bilder zu ermitteln.

Es wurde beobachtet, dass herkömmliche Techniken zur digitalen Nachverarbeitung bei der winkelselektiven Beleuchtung in bestimmten Situationen nur eine beschränkte Genauigkeit aufweisen können. Beispielsweise kann es vorkommen, dass bei Probenobjekten, die vergleichsweise weit entfernt von der Fokusebene der optischen Vorrichtung angeordnet sind, die digitale Nachverarbeitung nur mit einer großen Ungenauigkeit durchgeführt werden kann.

KURZE BESCHREIBUNG DER ERFINDUNG

Deshalb besteht ein Bedarf für verbesserte Techniken zur digitalen Nachbearbeitung bei der winkelselektiven Beleuchtung. Insbesondere besteht ein Bedarf für solche Techniken, die zumindest einige der oben genannten Nachteile und Einschränkungen beheben.

Diese Aufgabe wird von den Merkmalen des Anspruchs 1 und des Anspruchs 15 gelöst. Der Anspruch 1 betrifft ein Verfahren zum Bestimmen einer Anordnung eines Probenobjekts in einer optischen Vorrichtung. Der Anspruch 15 betrifft eine optische Vorrichtung. Die Merkmale der abhängigen Patentansprüche definieren Ausführungsformen.

Zum Beispiel kann die Anordnung eine Position des Probenobjekts in Bezug auf die Fokusebene bezeichnen, d.h. beispielsweise einen Abstand zwischen dem Probenobjekt und der Fokusebene. Es wäre auch möglich, dass die Anordnung eine Ausdehnung des Probenobjekts in Bezug auf die Fokusebene bezeichnet, d.h. eine Ausdehnung parallel zur optischen Hauptachse der optischen Vorrichtung.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

KURZE BESCHREIBUNG DER FIGUREN

Die oben beschriebenen Eigenschaften, Merkmale und Vorteile dieser Erfindung sowie die Art und Weise, wie diese erreicht werden, werden klarer und deutlicher verständlich im Zusammenhang mit den Zeichnungen.

FIG. 1 ist eine schematische Darstellung einer optischen Vorrichtung mit einer Recheneinheit, einem Beleuchtungsmodul und einem Probenhalters.

FIG. 2 ist ein Flussdiagramm eines Verfahrens zum Bestimmen der Anordnung eines Probenobjekts in Bezug auf eine Fokusebene.

FIG. 3 ist eine schematische Darstellung eines Beleuchtungsmoduls.

FIG. 4 illustriert schematisch das Beleuchten eines Probenobjekts unter verschiedenen Beleuchtungsrichtungen.

FIG. 5 illustriert schematisch mehrere Bilder des Probenobjekts, wobei unterschiedliche Bilder eine Abbildung des Probenobjekts unter Beleuchtung aus unterschiedlichen Beleuchtungsrichtungen beinhalten.

FIG. 6 illustriert schematisch ein einzelnes Bild des Probenobjekts, wobei dieses Bild mehrere Abbildungen des Probenobjekts unter Beleuchtung aus unterschiedlichen Beleuchtungsrichtungen beinhaltet.

FIG. 7 illustriert schematisch ein Muster beinhaltend mehrere Beleuchtungsrichtungen

FIG. 8 illustriert schematisch ein Muster beinhaltend mehrere Beleuchtungsrichtungen.

FIG. 9 zeigt Messdaten eines Bilds des Probenobjekts unter Beleuchtung mittels des Musters gemäß dem Beispiel der FIG. 8.

FIG. 10 illustriert schematisch ein Muster beinhaltend mehrere Beleuchtungsrichtungen.

FIG. 11 illustriert schematisch das Durchführen einer Korrelation zwischen Daten, die gemäß verschiedener Beispiele indikativ für Bilder des Probenobjekts unter Beleuchtung aus unterschiedlichen Beleuchtungsrichtungen sind.

FIG. 12 illustriert schematisch das Durchführen einer Korrelation zwischen Daten, die gemäß verschiedener Beispiele indikativ für Bilder des Probenobjekts unter Beleuchtung aus unterschiedlichen Beleuchtungsrichtungen sind.

FIG. 13 illustriert schematisch das Bestimmen eines Kontrastbilds als Vorkonditionierung vor dem Durchführen einer Korrelation.

FIG. 14 zeigt Messdaten des Kontrastbilds für das Bild gemäß FIG. 9.

FIG. 15 ist ein Flussdiagramm eines Verfahrens.

FIG. 16 illustriert schematisch das Auswerten eines Maximums der Korrelation.

FIG. 17 illustriert schematisch die Ausdehnung eines defokussiert angeordneten Probenobjekts.

FIG. 18 illustriert schematisch die Ausdehnung eines fokussiert angeordneten Probenobjekts.

FIG. 19 illustriert schematisch die Position und Anordnung von mehreren Schichten einer schichtaufgelösten Messung für ein fokussiert angeordnetes Probenobjekt.

## DETAILLIERTE BESCHREIBUNG

In den Figuren bezeichnen gleiche Bezugszeichen gleiche oder ähnliche Elemente. Die Figuren sind schematische Repräsentationen. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird.

Nachfolgend werden verschiedene Techniken in Bezug auf die winkelselektive Beleuchtung beschrieben. Manchmal wird die winkelselektive Beleuchtung auch als winkelaufgelöste Beleuchtung bezeichnet. Bei der winkelselektiven Beleuchtung wird ein Probenobjekt aus mehreren Beleuchtungsrichtungen beleuchtet; deshalb erfolgt also eine im Winkel strukturierte Beleuchtung. Dadurch verändert sich die Abbildung des Probenobjekts. Beispielsweise kann ein Ort der Abbildung variieren. Dies kann im Rahmen der digitalen Nachverarbeitung ausgenutzt werden, um zusätzliche Informationen über das Probenobjekt zu erhalten. Insbesondere kann ein Abstand zwischen Abbildungen des Probenobjekts, die unterschiedlichen Beleuchtungsrichtungen entsprechen, ermittelt werden.

Es wird das Berechnen der Anordnung des Probenobjekts in Bezug auf eine optische Vorrichtung, mit welcher die winkelselektive Beleuchtung vorgenommen wird, beschrieben. Dabei wird die Anordnung des Probenobjekts, beispielsweise die Position des Probenobjekts, in Bezug auf die Fokusebene berechnet, d.h. einen Abstand zwischen dem Probenobjekt und der Fokusebene. Die Position könnte zum Beispiel auf einen Mittelpunkt des Probenobjekts bezogen sein. Die Position kann beispielsweise entlang einer Richtung definiert sein, die parallel zur optischen Hauptachse der optischen Vorrichtung ist; diese Richtung wird typischerweise als Z-Richtung bezeichnet. Alternativ oder zusätzlich zur Position des Probenobjekts kann die Anordnung des Probenobjekts beispielsweise auch die Ausdehnung des Probenobjekts parallel zur Z-Richtung bezeichnen. Beispielsweise werden im Bereich der Biotechnologie häufig Probenobjekte untersucht, die dreidimensionale Körper aufweisen und deshalb auch eine signifikante Ausdehnung entlang der Z-Richtung aufweisen können.

Mittels der hierin beschriebenen Techniken kann die Anordnung der Probe besonders zügig berechnet werden, beispielsweise ohne dass eine Bildgebung für eine Vielzahl von Schichten individuell erfolgen muss. Dies kann eine Licht-toxische Wirkung beschränken und eine schnelle Fokussierung ermöglichen. Außerdem kann es mittels der hierin beschriebenen Techniken möglich sein, die Anordnung der Probe besonders genau zu berechnen.

Die hierin beschriebenen Techniken der winkelselektiven Beleuchtung können mit unterschiedlichen Anwendungen kombiniert werden. Die Anwendungen können von der bestimmten Anordnung der Probe profitieren. Dabei können die Anwendungen mit dem Typ der verwendeten optischen Vorrichtung korrelieren. Beispielsweise könnte die optische Vorrichtung ein herkömmliches Lichtmikroskop implementieren. Das Lichtmikroskop könnte einen Probenhalter haben, der eingerichtet ist, um das Probenobjekt in der optischen Hauptachse zu fixieren. Beispielsweise könnte das Lichtmikroskop einen motorisierten Probenhalter aufweisen, d.h. beispielsweise einen Elektromotor, der eingerichtet ist, um dem Probenhalter zu verschieben. Insbesondere könnte dadurch eine Autofokus-Anwendung ermöglicht werden, bei welcher der Probenhalter entlang der Z-Richtung verschoben wird. Als Eingang in die Autofokus-Anwendung könnte dann die Position des Probenobjekts in Bezug auf die Fokusebene, wie sie aus der digitalen Nachverarbeitung bei der winkelselektiven Beleuchtung erhalten wird, verwendet werden.

In einem weiteren Beispiel könnte der Fokus-Verstellweg, der einem Benutzer zugänglich gemacht wird, in Abhängigkeit der bestimmten Anordnung des Probenobjekts limitiert werden. Dazu könnte eine Benutzerschnittstelle geeignet angesteuert werden.

In einem weiteren Beispiel könnte die optische Vorrichtung ein Laser-Scanning-Mikroskop implementieren. Derart kann eine Fluoreszenz-Bildgebung ermöglicht werden. Ein Beispiel für eine spezielle Anwendung der Fluoreszenz-Bildgebung sind schichtaufgelöste Messungen, bei denen Bilder für mehrere Schichten eines Probenobjekts erfasst werden. Ein Beispiel ist die sogenannte Lichtblatt-Mikroskopie, bei der mehrere wohldefinierte Schichten des Probenobjekts individuell zur Fluoreszenz angeregt werden können. Siehe beispielsweise DE 20 2013 012 338 U1. Dabei kann es im Zusammenhang mit der digitalen Nachverarbeitung bei der winkelselektiven Beleuchtung möglich sein, die Anzahl und/oder die Positionen der Schichten basierend auf der bestimmten Position und Ausdehnung des Probenobjekts in Bezug auf die Fokusebene zu bestimmen.

In einer weiteren Anwendung können Langzeit-Messungen stabilisiert werden, wobei die Langzeit-Messungen eine Messdauer aufweisen, während welcher sich die Form und/oder Ausdehnung des Probenobjekts verändert. Dies wäre z.B. bei Zeitraffer-Messungen der Fall. Dies kann beispielsweise bei mobilen Proben in einer 3D Matrix der Fall sein. Beispielsweise könnten einzelne Probenbestandteile, wie beispielsweise einzelne Zellen, eine hohe Mobilität aufweisen. Außerdem können dadurch Drifts, zum Beispiel aufgrund von Temperaturschwankungen oder externen Vibrationen, kompensiert werden.

Für viele Anwendungen, die durch die digitale Nachverarbeitung bei der winkelselektiven Beleuchtung ermöglicht werden - wie beispielsweise die voranstehend genannte Autofokus-Anwendung und die voranstehend genannte Lichtblatt-Mikroskopie-Anwendung - kann es erstrebenswert sein, dass die Anordnung des Probenobjekts in Bezug auf die Fokusebene mit einer besonders großen Genauigkeit bekannt ist. Nachfolgend werden Techniken in Bezug auf die digitale Nachverarbeitung bei der winkelselektiven Beleuchtung beschrieben, die es ermöglichen, die Anordnung des Probenobjekts in Bezug auf die Fokusebene mit einer besonders großen Genauigkeit zu berechnen.

In verschiedenen Beispielen wird diese Aufgabe dadurch gelöst, dass ein oder mehrere Bilder, die unterschiedlichen Beleuchtungsrichtungen des Probenobjekts entsprechen, durch eine Korrelation miteinander verglichen werden.

Die Korrelation kann es ermöglichen, einen Zusammenhang zwischen Abbildungen des Probenobjekts unter unterschiedlichen Beleuchtungsrichtungen zu quantifizieren. Insbesondere kann es mittels der Korrelation möglich sein, Abstände bzw. Verschiebungen zwischen den Abbildungen des Probenobjekts unter unterschiedlichen Beleuchtungsrichtungen zu bestimmen. Beispielsweise könnte es mittels der Korrelation möglich sein, diejenige translatorische Verschiebung zu identifizieren, die eine erste Abbildung des Probenobjekts bei einer ersten Beleuchtungsrichtung überführt in eine zweite Abbildung des Probenobjekts bei einer zweiten Beleuchtungsrichtung.

Dabei ist die erste Abbildung des Probenobjekts bei der ersten Beleuchtungsrichtung mit einem ersten Bild assoziiert sein und die zweite Abbildung des Probenobjekts bei der zweiten Beleuchtungsrichtung ist mit einem weiteren, zweiten Bild assoziiert. In einem solchen Fall ergibt sich eine beispielhafte Implementierung der Korrelation aus folgender Gleichung:

$$K(T) = \sum_n x(n)y(n+T). \tag{1}$$

Dabei kann der Wert der Korrelation für verschiedene Verschiebungen $T$ zwischen dem ersten Bild $x$ und dem zweiten Bild $y$ bestimmt werden. Ein Maximum der Korrelation bezeichnet dasjenige $T \equiv T_0$, bei welchem das erste Bild und das entsprechend verschobene zweite Bild eine besonders große Ähnlichkeit aufweisen. Deshalb ist $T_0$ indikativ für den Abstand zwischen den Abbildungen des Probenobjekts unter unterschiedlichen Beleuchtungsrichtungen. $n$ indiziert die Bildpunkte. In Gleichung 1 ist vereinfacht eine eindimensionale Korrelation beschrieben, wobei im Allgemeinen auch eine zweidimensionale Korrelation durchgeführt werden könnte. Weil unterschiedliche Bilder verglichen werden, wird diese Art der Korrelation auch manchmal als Kreuzkorrelation bezeichnet.

Die Position des Maximums der Korrelation kann anschließend verwendet werden, um die Anordnung des Probenobjekts in Bezug auf die Fokusebene zu bestimmen. Beispielsweise könnte der Abstand zwischen dem Probenobjekt und der Fokusebene durch die folgende Gleichung erhalten werden:

$$\Delta z = T \frac{\cos\alpha \cdot \cos\beta}{\sin(\alpha+\beta)}, \tag{2}$$

wobei $\alpha$ und $\beta$ jeweils die Winkel zwischen den Beleuchtungsrichtungen und der optischen Hauptachse bezeichnen. Entsprechende Techniken sind im Grundsatz aus DE 10 2014 109 687 A1 bekannt.

Dabei bezeichnet Gleichung 2 lediglich eine beispielhafte Implementierung einer entsprechenden Berechnung. Es könnten auch andere Formulierungen von Gleichung 2 verwendet werden, zum Beispiel:

$$\Delta z = T \frac{\Delta IO}{\Delta L+T}, \tag{3}$$

wobei $\Delta IO$ den Abstand zwischen den zum Erzeugen der Beleuchtungsrichtungen verwendeten Lichtquellen und der Fokusebene bezeichnet und wobei $\Delta L$ den Abstand zwischen den verwendeten Lichtquellen bezeichnet.

Alternativ oder zusätzlich zur Position des Maximums der Korrelation könnten auch andere Charakteristiken der Korrelation zum Bestimmen der Anordnung des Probenobjekts in Bezug auf die Fokusebene verwendet werden. Ein Beispiel umfasst die Breite des Maximums der Korrelation. Dadurch wäre es zum Beispiel möglich - durch entsprechende Anwendung der Gleichung 2 -, auf die Ausdehnung des Probenobjekts in Bezug auf die Fokusebene zurück zu schließen.

Solche oben stehend beschriebenen Techniken sind besonders flexibel und können je nach gewünschter Implementierung angepasst werden. In einem ersten Beispiel könnte ein einzelnes Bild aufgenommen werden, wobei dabei zeitparallel zwei unterschiedliche Beleuchtungsrichtungen aktiviert sind. In diesem ersten Beispiel kann die Korrelation auch als Autokorrelation bezeichnet werden. Dabei entspricht ein Abstand zwischen Maxima der Autokorrelation dem Abstand des Probenobjekts zur Fokusebene. Es könnte beispielsweise auch die Position eines Maximums der Autokorrelation gegenüber null betrachtet werden. In einem zweiten Beispiel könnte ein einzelnes Bild aufgenommen werden, wobei dabei drei unterschiedliche Beleuchtungsrichtungen aktiviert sind. Wiederum könnte eine Autokorrelation verwendet werden, wobei das Maximum der Autokorrelation dem Abstand des Probenobjekts zur Fokusebene entspricht. In einem dritten Beispiel könnten beispielsweise zeitsequentiell oder bei unterschiedlichen Frequenzen mehrere Bilder aufgenommen werden, wobei jedes Bild jeweils eine Abbildung des Probenobjekts unter einer einzelnen Beleuchtungsrichtung beinhaltet. In einem solchen Beispiel kann die Korrelation als Kreuzkorrelation bezeichnet werden. Wiederum entspricht das Maximum der Korrelation dem Abstand des Probenobjekts zur Fokusebene.

In solchen voranstehend beschriebenen Beispielen sowie in weiteren hierin beschriebenen Beispielen kann es möglich sein, eine zweidimensionale Korrelation durchzuführen. Dann könnte bei der Auswertung insbesondere diejenige Richtung berücksichtigt werden, die entlang einer Verbindungslinie zwischen den unterschiedlichen verwendeten Beleuchtungsrichtungen orientiert ist. In anderen Beispielen wäre es auch möglich, dass direkt eine eindimensionale Korrelation entlang dieser Richtung durchgeführt wird.

In manchen Beispielen wäre es möglich, dass das mindestens eine Bild, welches die Abbildungen des Probenobjekts unter unterschiedlichen Beleuchtungsrichtungen beinhaltet, vor dem Anwenden der Korrelation vorkonditioniert wird. Beispielsweise könnten in einem Beispiel einzelne Abschnitte aus dem mindestens einen Bild extrahiert werden, sodass die Korrelation nur auf einen Teil des mindestens einen Bildes angewendet wird. Derart könnte beispielsweise eine ortsaufgelöste Korrelation für unterschiedliche Abschnitte des mindestens einen Bilds erhalten werden. Dadurch kann eine in lateralen Richtungen ortsaufgelöste Topographie des Probenobjekts bestimmt werden, eine sog. z-Karte. In weiteren Beispielen wäre es möglich, dass ein Mittelwert der Werte der verschiedenen Bildpunkte des mindestens einen Bilds von den Werten der verschiedenen Bildpunkte vor dem Durchführen der Korrelation abgezogen wird; in anderen Worten wäre es möglich, dass die Korrelation auf ein Kontrastbild des mindestens einen Bilds angewendet wird. Beim Kontrastbild könnte dann noch der Betrag des Offset-bereinigten Bilds erzeugt werden. In noch weiteren Beispielen könnten die Werte der verschiedenen Bildpunkte in einer Richtung senkrecht zur Verbindungsachse zwischen den verschiedenen Beleuchtungsrichtungen kombiniert - z.B. addiert - werden; derart kann mittels einer einzelnen eindimensionalen Korrelation der Abstand zwischen den Abbildungen des Probenobjekts bei den unterschiedlichen Beleuchtungsrichtungen bestimmt werden.

Im Allgemeinen können unterschiedliche Techniken zur Vorkonditionierung kombiniert werden. Deshalb wäre es im Allgemeinen möglich, dass eine Korrelation zwischen Daten, die indikativ für zumindest einen Abschnitt eines Bild des Probenobjekts unter Beleuchtung aus der mindestens einen ersten Beleuchtungsrichtung sind, und Daten, die indikativ für zumindest einen Abschnitt eines Bilds des Probenobjekts Unterbeleuchtung aus der mindestens einen zweiten Beleuchtungsrichtung sind, durchgeführt wird.

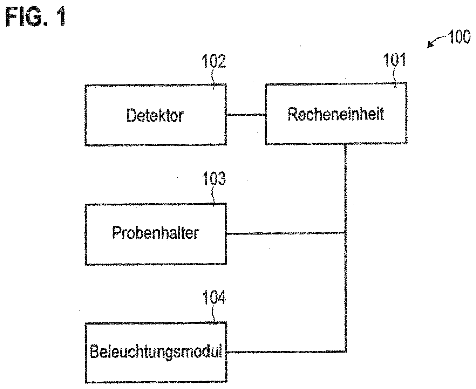

FIG. 1 illustriert Aspekte in Bezug auf eine optische Vorrichtung 100. Beispielsweise könnte die optische Vorrichtung 100 ein Lichtmikroskop oder ein Laser-Scanning-Mikroskop implementieren. Beispielsweise könnte die optische Vorrichtung 100 eingerichtet sein, um Fluoreszenz-Bildgebung und/oder Lichtblatt-Bildgebung durchzuführen.

Die optische Vorrichtung 100 umfasst ein Beleuchtungsmodul 104. Das Beleuchtungsmodul 104 kann eine Vielzahl von Lichtquellen aufweisen. Die verschiedenen Lichtquellen aus der Vielzahl von Lichtquellen können beabstandet zueinander angeordnet sein, sodass unterschiedliche Beleuchtungsrichtungen in Bezug auf ein Probenobjekt erreicht werden können. Einzelne Lichtquellen können individuell schaltbar sein. Die verschiedenen Lichtquellen können Licht mit gleichen oder unterschiedlichen Wellenlängen aussenden.

Das Probenobjekt kann auf einem Probenhalter 103 fixiert werden. Dabei wäre es möglich, dass der Probenhalter motorisiert ist und elektrisch verstellt werden kann. Insbesondere kann durch die Verstellung des Probenhalters eine Fokussierung des Probenobjekts erreicht werden. Dies kann automatisch erfolgen (Autofokus). Der Probenhalter 103 könnte aber auch manuell verstellbar sein.

Die optische Vorrichtung 100 umfasst auch einen Detektor 102. Beispielsweise könnte der Detektor 102 eine Kamera sein. Beispielsweise könnte der Detektor 102 einen CCD-Sensor oder einen CMOS-Sensor mit mehreren Bildpunkten umfassen. Der Detektor 102 könnte eine Sensitivität aufweisen, die im Infrarot-Bereich liegt.

Das Beleuchtungsmodul 104 wird insbesondere für die winkelselektive Beleuchtung unter den unterschiedlichen Beleuchtungsrichtungen eingesetzt. Optional wäre es möglich, dass das Beleuchtungsmodul 104 auch für die herkömmliche Bildgebung verwendet wird. In anderen Beispielen wäre es aber auch möglich, dass die optische Vorrichtung 101 weiteres Beleuchtungsmodul aufweist (in FIG. 1 nicht dargestellt), welches im Zusammenhang mit der herkömmlichen Bildgebung verwendet wird. Für die herkömmliche Bildgebung könnte auch ein weiterer Detektor vorhanden sein (in FIG. 1 nicht dargestellt).

In dem Beispiel der FIG. 1 sind das Beleuchtungsmodul 104 und der Detektor 102 auf unterschiedlichen Seiten des Probenhalters 103 angeordnet. In anderen Beispielen wäre es auch möglich, dass das Beleuchtungsmodul 104 und der Detektor 102 auf derselben Seite des Probenhalters 103 angeordnet sind.

Die optische Vorrichtung 100 umfasst auch eine Recheneinheit 101. Beispielsweise könnte die Recheneinheit 101 als Mikroprozessor oder Prozessor implementiert sein. Die Recheneinheit 101 könnte auch als Feld programmierbares Array (FPGA) oder applikationsspezifischer integrierter Schaltkreis (ASIC) implementiert sein.

Die Recheneinheit 101 ist eingerichtet, um Steuerfunktionalität in Bezug auf das Beleuchtungsmodul 104, den Probenhalter 103, sowie den Detektor 102 zu übernehmen. Beispielsweise könnte die Recheneinheit 101 eingerichtet sein, um Steuersignale an das Beleuchtungsmodul 104 zu senden, wobei die Steuersignale indikativ für ein oder mehrere Lichtquellen aus der Vielzahl von Lichtquellen des Beleuchtungsmoduls 104 sind, die eingeschaltet werden sollen. Die Recheneinheit 101 könnte beispielsweise eingerichtet sein, um Steuersignale an den Probenhalter 103 zu senden, wobei die Steuersignale indikativ für eine Verstellung des Probenhalters 103 - zum Beispiel parallel zur Z-Richtung - sind. Die Recheneinheit 101 könnte beispielsweise eingerichtet sein, um Steuersignale an den Detektor 102 zu senden, wobei die Steuersignale indikativ für eine Belichtungszeit sind, mit welcher der Detektor 102 ein oder mehrere Bilder erfassen soll. Die Steuersignale könnten alternativ oder zusätzlich auch für andere Bildparameter der zu erfassenden Bilder indikativ sein.

Die Recheneinheit 101 ist ferner eingerichtet, um digitale Bilder von Detektor 102 zu empfangen. Die Recheneinheit 101 ist zur digitalen Nachverarbeitung der Bilder eingerichtet. Beispielsweise könnte die Recheneinheit 101 Kontrastbilder erzeugen, durch Subtraktion des Mittelwerts der Werte der verschiedenen Bildpunkte. Die Recheneinheit 101 könnte auch die Werte der Bildpunkte entlang verschiedener Richtungen der Bilder addieren. Die Recheneinheit 101 könnte auch eine Kreuzkorrelation zwischen mehreren Bildern oder eine Autokorrelation für ein einzelnes Bild durchführen.

Die Recheneinheit 101 könnte auch verschiedene Anwendungen, wie beispielsweise eine Autofokus-Anwendung oder eine Lichtblatt-Mikroskopie-Anwendung, implementieren.

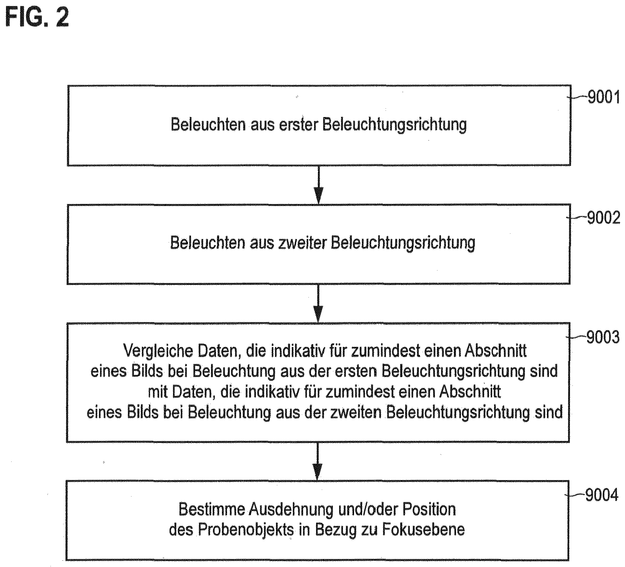

FIG. 2 ist ein Flussdiagramm eines erfindungsgemäßen Verfahrens. Beispielsweise könnte das Verfahren von der Recheneinheit 101 der optischen Vorrichtung 100 durchgeführt werden.

Das Verfahren gemäße dem Beispiel der FIG. 2 könnte beispielsweise eingebettet in eine Langzeit-Messung durchgeführt werden; in diesem Zusammenhang könnte das Verfahren gemäß FIG. 2 auch als Navigator-Messung bezeichnet werden, weil dadurch die Anordnung des Probenobjekts bestimmt werden kann, was wiederum für die Konfiguration der Langzeit-Messung hilfreich sein kann.

Zunächst erfolgt in Schritt 9001 das Beleuchten eines Probenobjekts aus mindestens einer ersten Beleuchtungsrichtung. Beispielsweise könnte in Schritt 9001 zum Beleuchten des Probenobjekts ein erstes Muster von Beleuchtungsrichtungen verwendet werden.

In Schritt 9002 erfolgt das Beleuchten des Probenobjekts aus mindestens einer zweiten Beleuchtungsrichtung, die verschieden von der mindestens einen ersten Beleuchtungsrichtung aus Schritt 9001 ist. Beispielsweise könnte in Schritt 9002 zum Beleuchten des Probenobjekts ein zweites Muster von Beleuchtungsrichtungen verwendet werden, welches verschieden von dem ersten Muster ist.

Weil grundsätzlich Beleuchtungsrichtungen mit einem schrägen Einfallswinkel verwendet werden können, können die hierin beschriebenen Techniken auch für Phasenobjekte verwendet werden. Diese weisen auch unter einem schrägen Einfallswinkel einen genügenden Kontrast auf. Es ist aber auch möglich, dass die hierin beschriebenen Techniken für Amplitudenobjekte verwendet werden.

In manchen Beispielen wäre es möglich, dass die Schritte 9001 und 9002 zeitsequentiell durchgeführt werden; dann kann für Schritt 9001 ein erstes Bild des Probenobjekts erhalten werden und für Schritt 9002 kann ein getrenntes, zweites Bild des Probenobjekts erhalten werden.

In anderen Beispielen wäre es aber auch möglich, dass die Schritte 9001 und 9002 zeitparallel durchgeführt werden; dann kann für die Schritte 9001 und 9002 ein gemeinsames Bild des Probenobjekts erhalten werden, welches das Probenobjekt sowohl unter Beleuchtung aus der mindestens einen ersten Beleuchtungsrichtung, als auch unter Beleuchtung aus der mindestens einen zweiten Beleuchtungsrichtung überlagert abbildet.

In verschiedenen Beispielen wäre es möglich, dass die Wellenlänge des Lichts für die mindestens eine erste Beleuchtungsrichtung gleich der Wellenlänge des Lichts für die mindestens eine zweite Beleuchtungsrichtung ist. Es wäre aber auch möglich, dass für die mindestens eine erste Beleuchtungsrichtung eine andere Wellenlänge des Lichts verwendet wird, als für die mindestens eine zweite Beleuchtungsrichtung.

In manchen Beispielen wäre es möglich, dass vor dem Beleuchten des Probenobjekts aus der mindestens einen ersten Beleuchtungsrichtungen Schritt 9001 bzw. vor dem Beleuchten des Probenobjekts aus der mindestens einen zweiten Beleuchtungsrichtung in Schritt 9002 das Probenobjekt defokussiert wird. Dies kann beispielsweise basierend auf a-priori Wissen über einen Abstand zwischen dem Probenobjekt und einer Fokusebene der optischen Vorrichtung geschehen. Dadurch kann der wellenoptische Effekt reduziert werden. Der durch das Defokussieren eingebrachte Fehler kann anschließend rechnerisch kompensiert werden.

In manchen Beispielen wäre es möglich, dass vor dem Beleuchten des Probenobjekts aus der mindestens einen ersten Beleuchtungsrichtung in Schritt 9001 bzw. vor dem Beleuchten des Probenobjekts aus der mindestens einen zweiten Beleuchtungsrichtung in Schritt 9002 eine geeignete Blende für den Detektor 102 gewählt wird. Dadurch kann die Tiefenschärfe beeinflusst werden. Eine eventuell parallel durchgeführte Langzeit-Messung kann durch das selektive Verändern der verwendeten Blende unter Umständen kurzzeitig unterbrochen werden, jedoch sonst ohne Einschränkung mit der entsprechenden gewünschten Blende durchgeführt werden. Beispielsweise könnte für die Schritte 9001, 9002 eine Hilfsoptik für den Detektor 102 verwendet werden, die eine besonders kleine Blende mit großer Tiefenschärfe aufweist. Eine Langzeit-Messung könnte dann eine andere, größere Blende verwenden. Es könnten im Allgemeinen auch unterschiedliche Detektoren für das Beleuchten des Probenobjekts in den Schritten 9001, 9002 einerseits und eine Langzeit-Messung andererseits durchgeführt werden. Diese Detektoren könnten beispielsweise auf gegenüberliegenden Seiten des Probenhalters 103 oder aber auch auf derselben Seite des Probenhalters 103 angebracht sein. Beispielsweise wäre es möglich, dass diese Detektoren eine unterschiedliche Blende aufweisen. Beispielsweise wäre es auch möglich, dass diese Detektoren eine unterschiedliche Vergrößerung aufweisen. Beispielsweise wäre es möglich, dass der Detektor 102, der in den Schritte 9001, 9002 benutzt wird, eine vergleichsweise geringe Vergrößerung aufweist. Derart kann die Fokusposition des Probenobjekts auch dann bestimmt werden, wenn dieses vergleichsweise defokussiert angeordnet ist.

In Schritt 9003 erfolgt das Vergleichen von Daten, die indikativ für zumindest einen Abschnitt eines Bilds bei Beleuchtung aus der mindestens einen ersten Beleuchtungsrichtung sind, mit Daten, die indikativ für zumindest einen Abschnitt eines Bilds bei Beleuchtung aus der mindestens einen zweiten Beleuchtungsrichtung sind.

In einem einfachen Beispiel könnten die Daten gleich dem oder den Bildern sein, die in Schritt 9001 und 9002 erfasst wurden. Es wäre aber in anderen Beispielen auch möglich, dass eine Vorkonditionierung des oder der Bilder, die in Schritt 9001 und 9002 erfasst wurden, erfolgt, und dadurch die Daten aus Schritt 9003 erhalten werden. Die Vorkonditionierung könnte zum Beispiel das Bestimmen eines Kontrastbilds umfassen. Die Vorkonditionierung könnte beispielsweise das Extrahieren von einem Abschnitt oder von mehreren Abschnitten aus dem oder den Bildern aus Schritten 9001 und 9002 umfassen. Dann kann das Bestimmen der Anordnung und beispielsweise die nachfolgende Anwendung, z.B. eine Fokus-Verfolgungs-Anwendung, auf bestimmte Bereiche eines ausgedehnten Probenobjekts oder ein oder mehrere Probenobjekte aus einer Vielzahl von Probenobjekten beschränkt werden bzw. lateral ortsaufgelöst durchgeführt werden. Dadurch kann eine ortsaufgelöste Topographie des Probenobjekts bestimmt werden. Die Vorkonditionierung könnte beispielsweise eine Kombination von mehreren Werten von Bildpunkten des oder der Bilder aus Schritten 9001 und 9002 umfassen. Die Vorkonditionierung könnte auch andere Techniken der Bildverarbeitung, zum Beispiel eine Entfaltung, betreffen.

Der Vergleich aus Schritt 9003 umfasst eine Korrelation zwischen den Daten, die indikativ für den zu mindestens einen Abschnitt des Bilds des Probenobjekts unter Beleuchtung aus der mindestens einen ersten Beleuchtungsrichtung sind, und den Daten, die indikativ für den zumindest einen Abschnitt des Bilds des Probenobjekts unter Beleuchtung aus der mindestens einen zweiten Beleuchtungsrichtung sind. Die Korrelation kann ein besonders genaues Vergleichen ermöglichen und kann zuverlässige Ergebnisse liefern, auch wenn das Probenobjekt vergleichsweise defokussiert angeordnet ist.

Dabei wäre es zum Beispiel möglich, dass die Korrelation als Autokorrelation implementiert ist. Eine Autokorrelation könnte beispielsweise dann verwendet werden, wenn das Beleuchten aus der mindestens einen ersten Beleuchtungsrichtung in Schritt 9001 und das Beleuchten aus der mindestens einen zweiten Beleuchtungsrichtung in Schritt 9002 zeitparallel durchgeführt wird und ein einzelnes Bild erhalten wird; dann können ein und dieselben Daten indikativ für den zumindest einen Abschnitt des Bilds des Probenobjekts unter Beleuchtung aus dem mindestens einen ersten Beleuchtungsrichtung, als auch für den zumindest einen Abschnitt des Bilds des Probenobjekts unter Beleuchtung aus der mindestens einen zweiten Beleuchtungsrichtung sein. Eine solche Technik ermöglicht es, dass Beleuchten des Probenobjekts aus der mindestens einen ersten Beleuchtungsrichtung und aus der mindestens einen zweiten Beleuchtungsrichtung besonders zügig durchzuführen. Es wäre aber auch möglich, dass die Korrelation als Kreuzkorrelation zwischen unterschiedlichen Daten implementiert ist. Eine Kreuzkorrelation könnte beispielsweise dann verwendet werden, wenn das Beleuchten aus der mindestens einen ersten Beleuchtungsrichtung in Schritt 9001 und das Beleuchten aus der mindestens einen zweiten Beleuchtungsrichtung in Schritt 9002 zeitsequentiell durchgeführt wird und dadurch zwei getrennte Bilder erhalten werden; dann könnten unterschiedliche Daten indikativ für den zumindest einen Abschnitt des Bilds des Probenobjekts unter Beleuchtung aus der mindestens einen ersten Beleuchtungsrichtung sein bzw. indikativ für den zumindest einen Abschnitt des Bilds des Probenobjekts unter Beleuchtung aus der mindestens einen zweiten Beleuchtungsrichtung sein. Eine solche Technik ermöglicht es, die Anordnung des Probenobjekts in Bezug auf die Fokusebene der optischen Vorrichtung besonders genau zu bestimmen.

In Schritt 9004 erfolgt anschließend das Berechnung der Ausdehnung und/oder der Position des Probenobjekts - das heißt im Allgemeinen der Anordnung des Probenobjekts - in Bezug auf die Fokusebene. Dazu können Techniken verwendet werden, wie sie voranstehend in Bezug auf die Gleichungen 2 und 3 beschrieben wurden.

Ausgehend von der bestimmten Anordnung des Probenobjekts können dann unterschiedliche Anwendungen implementiert werden, wie beispielsweise eine Autofokus-Anwendung oder eine Lichtblatt-Mikroskopie-Anwendung (in FIG. 2 nicht dargestellt).

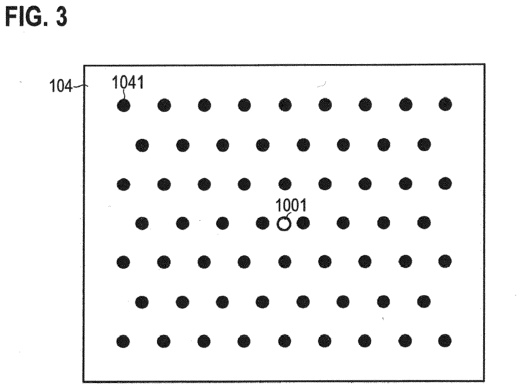

FIG. 3 illustriert Aspekte in Bezug auf das Beleuchtungsmodul 104. Das Beleuchtungsmodul 104 umfasst eine Vielzahl von Lichtquellen 1041. Beispielsweise könnten die Lichtquellen 1041 als Leuchtdioden implementiert sein. Es wären aber auch andere Arten von Leuchten möglich, um die Lichtquellen zu implementieren.

In dem Beispiel der FIG. 3 sind die Lichtquellen 1041 in einer Gitterstruktur auf einem Träger angeordnet. Es sind unterschiedliche Gitterstrukturen mit unterschiedlichen Einheitszellen möglich. Die Lichtquellen 1041 müssen aber nicht notwendigerweise in einer Gitterstruktur angeordnet sein; es wären zum Beispiel auch ringförmige Anordnungen möglich.

In FIG. 3 ist ferner dargestellt, dass die Lichtquellen 1041 symmetrisch in Bezug auf die optische Hauptachse 1001 der optischen Vorrichtung 100 angeordnet sind. Das ist optional.

Die unterschiedlichen Lichtquellen 1041 können separat angesteuert werden. Dies bedeutet, dass einzelne Lichtquellen 1041 eingeschaltet werden können, während andere Lichtquellen 1041 ausgeschaltet verbleiben. Beispielsweise könnte die Recheneinheit 101 eingerichtet sein, um entsprechende Steuerdaten an das Beleuchtungsmodul 104 zu senden, die die unterschiedlichen Lichtquellen 1041 adressieren.

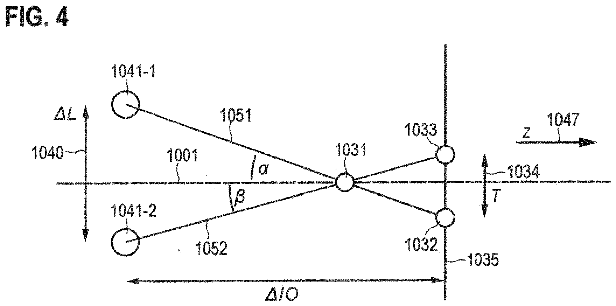

FIG. 4 illustriert Aspekte in Bezug auf unterschiedliche Beleuchtungsrichtung in 1051, 1052. In FIG. 4 ist die Beleuchtung eines Probenobjekts 1031 unter der Beleuchtungsrichtung 1051 dargestellt; dabei ist die Beleuchtungsrichtung 1051 mit der Lichtquelle 1041-1 assoziiert. Bei Beleuchtung des Probenobjekts 1031 unter der Beleuchtungsrichtung 1051 ergibt sich eine Abbildung 1033 des Probenobjekts 1031 in der Fokusebene 1035. Entsprechend ergibt sich bei Beleuchtung des Probenobjekts 1031 unter der Beleuchtungsrichtung 1052 - die mit der Lichtquelle 1041-2 assoziiert ist - eine Abbildung 1032 des Probenobjekts 1031 in der Fokusebene 1035. Aus FIG. 4 ist ersichtlich, dass die Abbildungen 1032, 1033 gegeneinander um einen Abstand 1034 (mit $T$ bezeichnet; vgl. Gleichungen 2 und 3) verschoben sind. Durch die Korrelation kann der Abstand 1034 besonders genau ermittelt werden.

In FIG. 4 sind ferner verschiedene Größen aus Gleichungen 2 und 3 eingezeichnet. Beispielsweise ist in FIG. 4 der Abstand 1040, $\Delta L$ zwischen den Lichtquellen 1041-1, 1041-2 dargestellt; der Abstand 1040 kann auch als Maß für den Abstand zwischen den Beleuchtungsrichtungen 1051, 1052 dienen. Als weiteres Maß für den Abstand zwischen den Beleuchtungsrichtungen 1051, 1052 könnten die Winkel $\alpha$, $\beta$ dienen, welche die Beleuchtungsrichtungen mit der optischen Hauptachse 1001 (die entlang der z-Richtung 1047 orientiert ist) der optischen Vorrichtung 100 einschließen bzw. im Allgemeinen der Winkel zwischen den Beleuchtungsrichtungen.

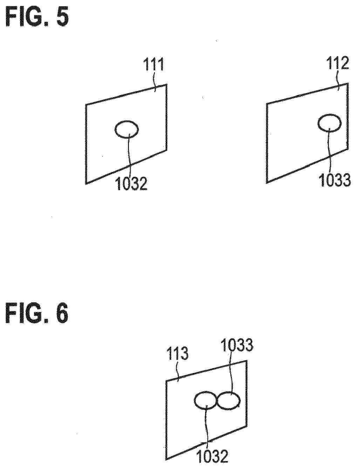

FIG. 5 illustriert Aspekte in Bezug auf Bilder 111, 112 des Probenobjekts 1031. Das Bild 111 beinhaltet dabei die Abbildung 1032 des Probenobjekts unter Beleuchtung aus der Beleuchtungsrichtung 1051. Das Bild 112 beinhaltet dabei die Abbildung 1033 des Probenobjekts 1031 unter Beleuchtung aus der Beleuchtungsrichtung 1052. Aus FIG. 5 ist ersichtlich, dass die Positionen der Abbildungen 1032, 1033 um den Abstand 1034 gegeneinander verschoben sind.

Beispielsweise könnten beide Bilder 111, 112 miteinander verglichen werden, um diesen Abstand 1034 zu ermitteln. Dazu könnte eine Kreuzkorrelation zwischen den Bildern 111, 112 angewendet werden.

FIG. 6 illustriert Aspekte in Bezug auf ein Bild 113 des Probenobjekts 1031. Das Bild 113 beinhaltet dabei sowohl die Abbildung 1032 des Probenobjekts 1031 unter Beleuchtung aus der Beleuchtungsrichtung 1051, als auch die Abbildung 1033 des Probenobjekts 1031 unter Beleuchtung aus der Beleuchtungsrichtung 1052. Aus FIG. 6 ist wiederum ersichtlich, dass die Positionen der Abbildungen 1032, 1033 um den Abstand 1034 gegeneinander verschoben sind.

Beispielsweise könnte das Bild 113 analysiert werden, um diesen Abstand 1034 zu ermitteln. Dazu könnte eine Autokorrelation auf das Bild 113 angewendet werden.

In Bezug auf die FIGs. 4-6 wurden Beispiele diskutiert, bei denen das Probenobjekt 1031 pro analysierter Abbildung 1032, 1033 aus einer einzelnen Beleuchtungsrichtung 1051, 1052 beleuchtet wird. In manchen Implementierung könnte es aber erstrebenswert sein, die Abbildung 1032 des Probenobjekts 1031 bei Beleuchtung aus einer ersten Vielzahl von Beleuchtungsrichtungen entsprechend einem ersten Muster zu vergleichen mit der Abbildung 1033 des Probenobjekts 1031 bei Beleuchtung aus einer zweiten Vielzahl von Beleuchtungsrichtungen entsprechend einem zweiten Muster. Dadurch kann nämlich erreicht werden, dass mehr Licht pro analysierter Abbildung das Probenobjekt 1031 beleuchtet. Dadurch kann die Anordnung des Probenobjekts 1031 ausgehend von einem oder mehreren Bildern mit besonders hohem Signal-zu-Rauschverhältnis bestimmt werden, sodass die Anordnung des Probenobjekts 1031 besonders genau ermittelt werden kann.

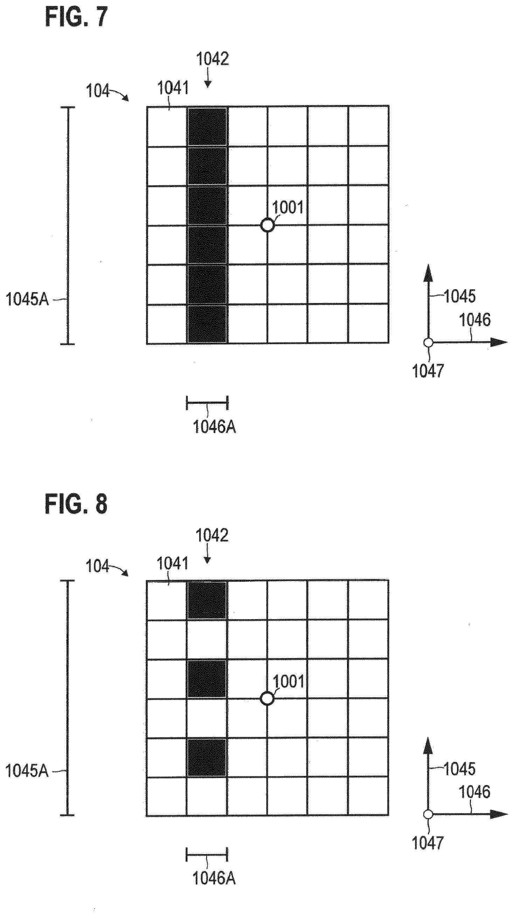

FIG. 7 illustriert Aspekte in Bezug auf das Beleuchtungsmodul 104. Insbesondere illustriert FIG. 7 eine Vielzahl von Lichtquellen 1041 des Beleuchtungsmoduls 104, die gemäß einem beispielhaften Muster 1042 zur Beleuchtung des Probenobjekts 1031 aktiviert sind.

In dem Beispiel der FIG. 7 entspricht das Muster 1042 einem Linienmuster. Dies bedeutet, dass bei einer gitterförmigen Anordnung der Lichtquellen 1041 beispielsweise alle Lichtquellen 1041 in einer Spalte des Gitters angeschaltet werden. In anderen Worten weisen benachbarte Beleuchtungsrichtungen des Musters 1042 keinen Abstand entlang der Richtung 1046 auf, sondern lediglich entlang der Richtung 1045.

Im Allgemeinen könnten sog. dünne Muster verwendet werden. Ein dünnes Muster kann dadurch charakterisiert sein, dass es in der Richtung 1045 eine Ausdehnung 1045A aufweist, die wesentlich größer ist, als die Ausdehnung 1046A in der dazu senkrechten Richtung 1046, z.B. mehr als 2-fach so groß, optional mehr als 5-fach so groß, weiter optional mehr als 20-fach so groß. Beispielsweise könnten im Falle eines Arrays von Lichtquellen 1041 entlang der Richtung 1045 eine größere Anzahl von Lichtquellen 1041 des Beleuchtungsmoduls 104 entlang der Richtung 1045 verwendet werden, als entlang der Richtung 1046, z.B. mehr als 2-mal so viele Lichtquellen, optional mehr als 5-mal so viele Lichtquellen, weiter optional mehr als 20-mal so viele Lichtquellen.

FIG. 8 illustriert auch Aspekte in Bezug auf das Beleuchtungsmodul 104. Insbesondere illustriert auch FIG. 8 eine Vielzahl von Lichtquellen 1041 des Beleuchtungsmoduls 104, die gemäß einem weiteren beispielhaften Muster 1042 zur Beleuchtung des Probenobjekts 1031 aktiviert sind.

Das Beispiel der FIG. 8 entspricht grundsätzlich dem Beispiel der FIG. 7. Dabei sind in dem Beispiel der FIG. 8 jedoch nicht alle Lichtquellen 1041 einer bestimmten Spalte aktiviert.

Sowohl in dem Beispiel der FIG. 7, als auch in dem Beispiel der FIG. 8 werden Muster 1042 verwendet, die lediglich eine Ausdehnung entlang der lateralen Richtung 1045 haben, jedoch keine Ausdehnung entlang der lateralen Richtung 1046 aufweisen. Dies bedeutet, dass eindimensionale Muster 1042 zur Beleuchtung des Probenobjekts 1031 verwendet werden.

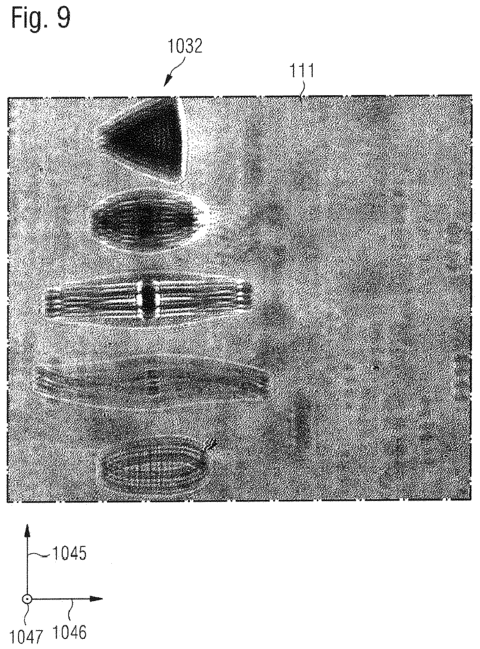

FIG. 9 zeigt Messdaten für ein Bild 111 des Probenobjekts 1031. Insbesondere beinhaltet das Bild 111 die Abbildung 1032 des Probenobjekts 1031 bei Beleuchtung mittels des Musters 1042 gemäß dem Beispiel der FIG. 8. Aus FIG. 9 ist ersichtlich, dass die Abbildung 1032 mehrfach in der Richtung 1045 wiederholt angeordnet ist, weil entlang dieser Richtung 1045 mehrere Lichtquellen 1041 gemäß dem Muster 1042 aktiviert sind.

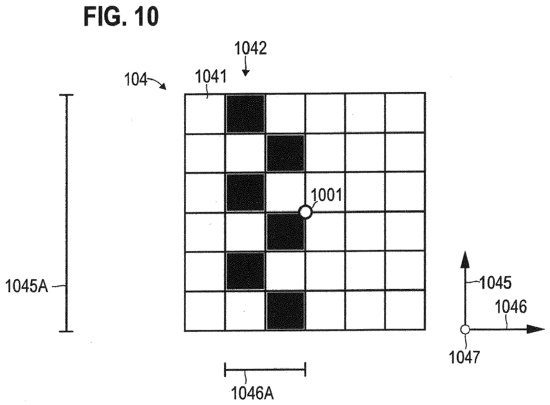

FIG. 10 illustriert Aspekte in Bezug auf das Beleuchtungsmodul 104. Insbesondere illustriert FIG. 10 eine Vielzahl von Lichtquellen 1041 des Beleuchtungsmoduls 104, die gemäß einem weiteren beispielhaften Muster 1042 zur Beleuchtung des Probenobjekts aktiviert sind.

Auch in FIG. 10 wird ein dünnes Muster verwendet, weil die Ausdehnung 1046A entlang der Richtung 1046 (zwei Lichtquellen) nicht mehr als 40 % der Ausdehnung 1045A entlang der Richtung 1045 beträgt.

Das Muster 1042 gemäß dem Beispiel der FIG. 10 weist eine zweidimensionale Ausdehnung sowohl entlang der Richtung 1045 auf, als auch entlang der Richtung 1046. Auch ein solches Muster mit zweidimensionale Ausdehnung könnte gemäß verschiedener Beispiele verwendet werden, um die Anordnung des Probenobjekts in Bezug auf die Fokusebene zu bestimmen.

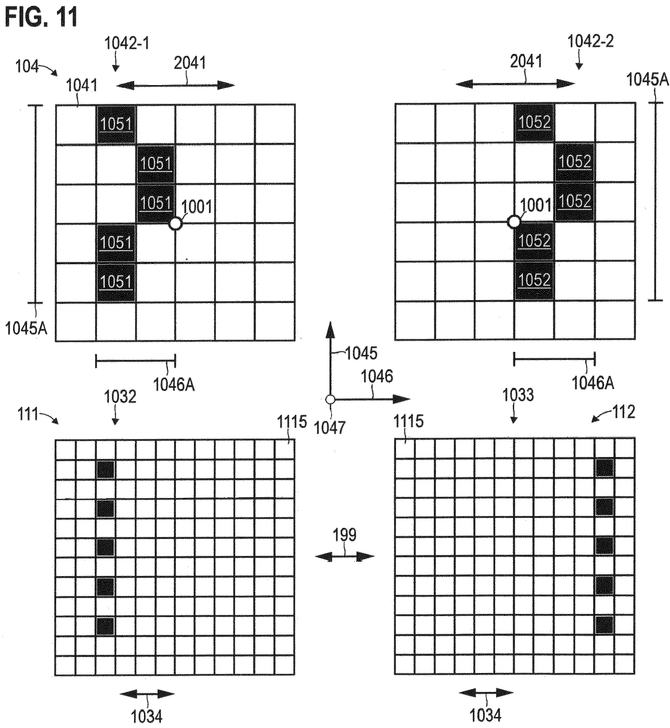

FIG. 11 illustriert Aspekte in Bezug auf das Vergleichen von Daten, die indikativ für das Bild 111 des Probenobjekts 1031 unter Beleuchtung aus den Beleuchtungsrichtungen 1051 gemäß einem Muster 1042-1 sind, mit Daten, die indikativ für das Bild 112 des Probenobjekts 1031 unter Beleuchtung aus den Beleuchtungsrichtungen 1052 gemäß einem Muster 1042-2 sind.

Beispielsweise könnte eine Korrelation 199 zum Vergleichen der Bilder 111, 112 verwendet werden.

Im Beispiel der FIG. 11 werden die Muster 1042-1, 1042-2 zeitsequentiell angewendet, sodass verschiedene Bilder 111, 112 erhalten werden. Es wäre aber auch möglich, dass die beiden Muster 1042-1, 1042-2 zeitparallel verwendet werden und ein einzelnes Bild erhalten wird. Dabei ergäbe sich eine Autokorrelationsfunktion, die für ein defokussiertes Probenobjekt mindestens drei Maxima aufweist (bei 0, -$T$, +$T$). Bei Kenntnis der Richtung der Defokussierung - vor oder hinter der Fokusebene - kann der Abstand zwischen dem Probenobjekt und der Fokusebene bestimmt werden. Die Richtung der Defokussierung könnte auch durch eine inkrementelle Veränderung der Position des Probenobjekts und erneuter Bestimmung des Abstands ermittelt werden.

In dem Beispiel der FIG. 11 ist ein Szenario gezeigt, bei welchem das Muster 1042-1 durch Translation 2041 auf das Muster 1042-2 abgebildet werden kann. Dies bedeutet, in anderen Worten, dass die Muster 1042-1, 1042-2 identisch sind, aber gegeneinander verschoben sind. Beispielsweise entspricht für jede der verwendeten Lichtquellen 1041 des Musters 1042-1 die Translation 2041 auch dem Abstand 1040 zu einer entsprechenden Lichtquelle 1041 des Musters 1042-2.

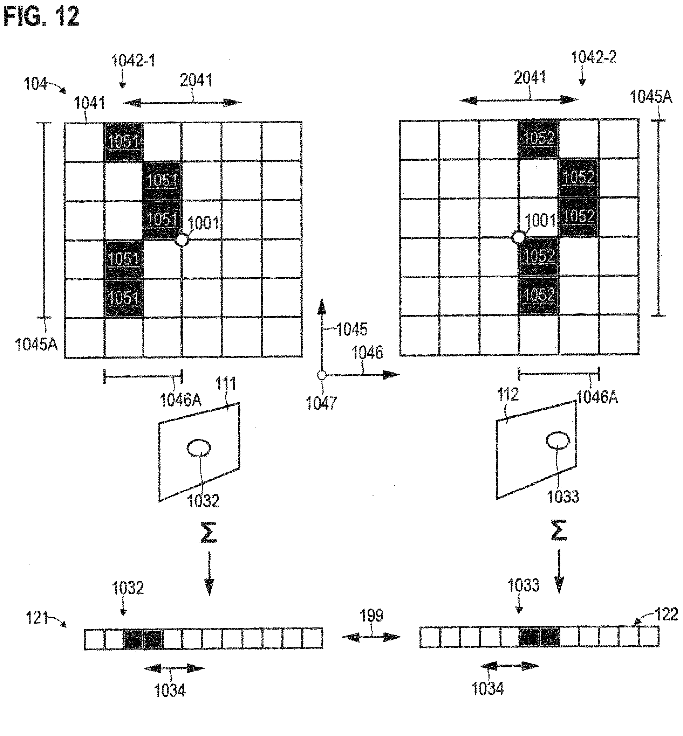

In dem Beispiel der FIG. 12 werden dünne Muster 1042-1, 1042-2 verwendet. Die Ausdehnung 1046A parallel zur Translation 2041 beträgt nur 40 % der Ausdehnung 1045A entlang der zur Translation 2041 senkrechten Richtung 1045. Dies ermöglicht eine besonders präzise Auswertung.

In dem Beispiel der FIG. 11 ist insbesondere ein Szenario dargestellt, bei welchem die Muster 1042-1, 1042-2 symmetrischen Bezug auf die optische Hauptachse 1001 angeordnet sind. Alternativ könnten auch Muster verwendet werden, die auf derselben Seite der optischen Hauptachse 1001 angeordnet sind, zum Beispiel zwei Linienmuster in unterschiedlichem Abstand zur optischen Hauptachse 1001.

In FIG. 11, unten sind die entsprechenden Bilder 111, 112 des Probenobjekts 1031 bei Beleuchtung gemäß dem Muster 1042-1 bzw. bei Beleuchtung gemäß dem Muster 1042-2 dargestellt. Die Bildpunkte 1115 der Bilder 111, 112 sind auch dargestellt. In FIG. 11 sind diejenigen Bildpunkte 115 schwarz gefüllt, bei denen sich die jeweilige Abbildung 1032, 1033 des Probenobjekts 1031 befindet.

Aus FIG. 11 ist ersichtlich dass die Abbildungen 1032, 1033 jeweils eine Periodizität entlang der Richtung 1045 aufweisen. Diese Periodizität wird aufgrund der Verwendung des entsprechenden Musters 1042-1, 1042-2, welches aufgrund der Verwendung mehrerer Lichtquellen 1041 auch eine Periodizität entlang der Richtung 1045 aufweist, verursacht.

Zusätzlich wird aber auch der Abstand 1034 beobachtet. Der Abstand 1034 wird durch die Translation 2041 verursacht. Der Abstand 1034 kann durch die Kreuzkorrelation 199 zwischen den Bildern 111, 112 ermittelt werden.

Wenn beispielsweise eine zweidimensionale Kreuzkorrelation entlang der Richtungen 1045, 1046 durchgeführt wird, werden Maxima der Kreuzkorrelation in beiden Richtungen 1045, 1046 beobachtet. Die Maxima der Kreuzkorrelation entlang der Richtung 1045 wird dabei durch die Verwendung der Muster 1042-1, 1042-2 bedingt; diese Maxima können bei der Auswertung zum Bestimmen des Abstands 1034 ignoriert werden. Vielmehr werden die Maxima der Kreuzkorrelation entlang der Richtung 1046 - d.h. der Verbindungslinien 1040 entsprechender Beleuchtungsrichtungen - berücksichtigt, um den Abstand 1034 zu bestimmen.

FIG. 12 illustriert Aspekte in Bezug auf das Vergleichen von Daten, die indikativ für das Bild 111 des Probenobjekts 1031 unter Beleuchtung aus den Beleuchtungsrichtungen 1051 gemäß einem Muster 1042-1 sind, mit Daten, die indikativ für das Bild 112 des Probenobjekts 1031 unter Beleuchtung aus den Beleuchtungsrichtungen 1052 gemäß einem Muster 1042-2 sind. Beispielsweise könnte eine Korrelation 199 zum Vergleichen der Bilder 111, 112 verwendet werden.

Das Beispiel der FIG. 12 entspricht grundsätzlich dem Beispiel der FIG. 11. In dem Beispiel der FIG. 12 werden die Bilder 111, 112 jedoch vorkonditioniert, um Daten 121, 122 zu erhalten. Die Daten 121, 122 sind indikativ für die Bilder 111, 112.

In dem Beispiel der FIG. 12 werden die Daten 121, 122 basierend auf einer Kombination von Bildpunkten 1115 der Bilder 111, 112 entlang der Richtung 1045 - das heißt senkrecht zur Translation 2041 - bestimmt. Dadurch wird die Periodizität entlang der Richtung 1045 aufgrund der Verwendung der Muster 1042-1, 1042-2 aus den Daten 121, 122 eliminiert und es kann eine eindimensionale Autokorrelation 199 durchgeführt werden. Diese kann besonders schnell durchgeführt werden, sodass Echtzeitanwendungen gefördert werden.

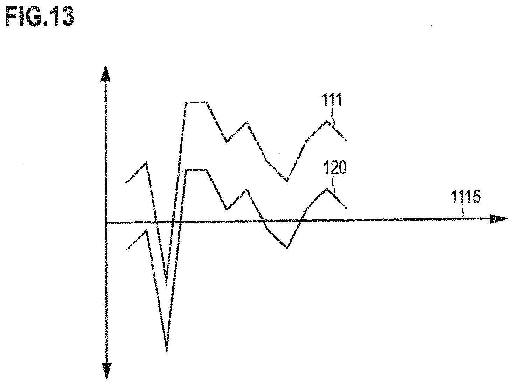

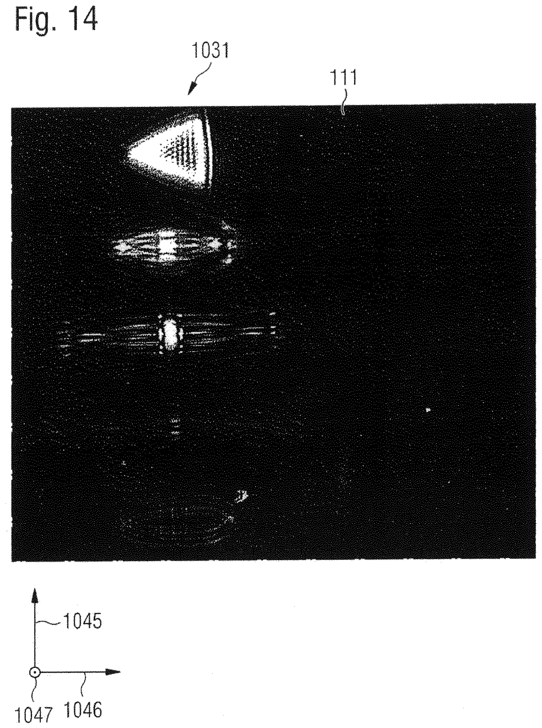

FIG. 13 illustriert Aspekte in Bezug auf das Bestimmen von Daten 120 als Kontrastbild eines Bilds 111. In FIG. 13 sind die Werte von Bildpunkte 1115 des Bilds 111 mit der gestrichelten Linie dargestellt. Diese Werte der Bildpunkte 1115 weisen einen Versatz gegenüber dem Nullpunkt - oder im Allgemeinen einem Referenzwert - auf. Durch Subtraktion des Mittelwerts kann dieser Versatz beseitigt werden und es wird das Kontrastbild 120 erhalten, d.h. $|I - < I >|$. Dabei wird also der Mittelwert von den Werten der Bildpunkte abgezogen und anschließend noch optional der Betrag gebildet (die Betragsbildung ist in FIG. 13 nicht dargestellt). FIG. 14 illustriert das Kontrastbild 120 für das Bild 111 gemäß dem Beispiel der FIG. 9. Basierend auf dem Kontrastbild 120 ist es möglich, die Anordnung des Probenobjekts 1031 zur Fokusebene besonders genau zu bestimmen. Beispielsweise kann bei der schrägen Beleuchtung von Phasenobjekten nämlich ein typischer Hell-Dunkel-Verlauf auftreten. Dieser Effekt kann bei der Berücksichtigung des Kontrastbilds 120 reduziert werden. Das Kontrastbild 120 ist insbesondere bei Fokus-Verfolgungs-Anwendungen hilfreich.

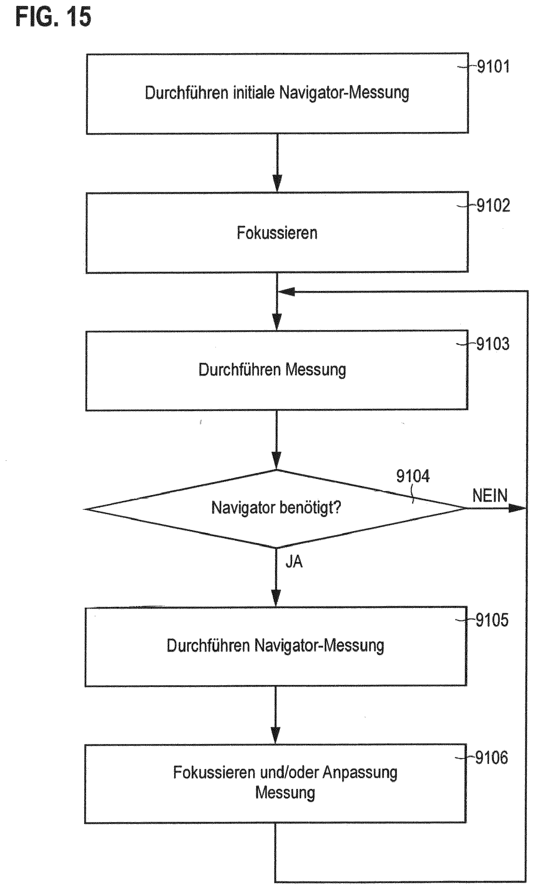

FIG. 15 ist ein Flussdiagramm eines beispielhaften Verfahrens. In dem Beispiel der FIG. 15 wird dargestellt, wie das Bestimmen der Anordnung des Probenobjekts 1031 in Bezug auf die Fokusebene 1035 kombiniert werden kann mit dem Durchführen einer Langzeit-Messung. Beispielsweise könnte die Langzeit-Messung eine Fluoreszenz-Bildgebung betreffen oder aber die Betrachtung eines Probenobjekts 1031 durch das Okular eines Lichtmikroskops durch einen Benutzer. Ein weiteres Beispiel ist die Lichtblatt-Bildgebung.

Zunächst wird in Schritt 9101 eine initiale Navigator-Messung durchgeführt. Die Navigator-Messung umfasst das Beleuchten des Probenobjekts 1031 aus mindestens einer ersten Beleuchtungsrichtung 1051 und das Beleuchten des Probenobjekts 1052 aus mindestens einer zweiten Beleuchtungsrichtung 1052. Beispielsweise könnte das Durchführen der Navigator-Messung die Schritte 9001-9004 gemäß dem Verfahren aus FIG. 2 umfassen.

Zunächst wird die initiale Navigator Messung in Schritt 9001 ohne a-priori Wissen über die Anordnung des Probenobjekts 1031 in Bezug auf die Fokusebene durchgeführt. Zum Beispiel könnte die initiale Navigator-Messung automatisch in Schritt 9001 durchgeführt werden, nachdem der Benutzer das Probenobjekt 1031 erstmals auf dem Probenhalter 103 platziert hat.

Das Fehlen von a-priori Wissen über die Anordnung des Probenobjekts 1031 kann beim Auswählen der in Schritt 9101 verwendeten Beleuchtungsrichtungen 1051, 1052 berücksichtigt werden. Insbesondere könnte berücksichtigt werden, dass eine signifikante Wahrscheinlichkeit dafür besteht, dass das Probenobjekt 1031 einen erheblichen Abstand zur Fokusebene 1035 aufweist. Deshalb könnten in Schritt 9101 solche Beleuchtungsrichtungen 1051, 1052 verwendet werden, die keinen besonders großen Abstand 1040 zueinander aufweisen. Sonst könnte nämlich der Fall auftreten, dass zumindest eine der Abbildungen 1033, 1032 nicht mehr durch die Apertur des Detektors 102 erfasst werden kann.

Die initiale Fokussierung des Probenobjekts 1031 kann gemäß dem in FIG. 15 beschriebenen Verfahren besonders schnell durchgeführt werden. Eine feldabhängige Bestimmung der Fokusposition ist möglich.

Anschließend wird basierend auf dem ermittelten Abstand 1034 zwischen den Abbildungen 1032, 1033 eine Fokussierung in Schritt 9102 durchgeführt.

Dann wird in Schritt 9103 die Langzeit-Messung gestartet, etwa eine Fluoreszenz-Messung. Während die Langzeit-Messung in Schritt 9103 mittels der optischen Vorrichtung 100 durchgeführt wird, wird in Schritt 9104 überprüft, ob eine Navigator-Messung benötigt wird. Beispielsweise könnte in Schritt 9104 überprüft werden, ob ein bestimmter Zeitgeber abgelaufen ist, wobei der Zeitgeber z.B. das periodische bzw. wiederholte Durchführen der Navigator-Messung auslösen kann.

Wenn in Schritt 9104 festgestellt wird, dass keine Navigator-Messung benötigt wird, wird das Durchführen der Langzeit-Messungen Schritt 9103 fortgesetzt.

Andernfalls wird eine Navigator-Messung in Schritt 9105 eingebettet in die Langzeit-Messung durchgeführt. Dies könnte auf verschiedene Arten und Weisen geschehen.

Beispielsweise könnte das Einbetten mittels Zeit-Multiplexen erfolgen, d.h. das Durchführen der Langzeit-Messung könnte während dem Durchführen der Navigator-Messung unterbrochen werden und anschließend wieder aufgenommen werden. Dann kann ein- und derselbe Detektor 102 für die Langzeit-Messung und die Navigator-Messung verwendet werden. Beispielsweise könnte der Spektralbereich, in welchem dieser Detektor 102 sensitiv ist, jeweils umgeschaltet werden, wenn zwischen der Langzeit-Messung und der Navigator-Messung umgeschaltet wird.

In einem anderen Beispiel könnte das Einbetten mittels Frequenz-Multiplexen erfolgen, d.h. das Durchführen der Langzeit-Messung könnte während dem Durchführen der Navigator-Messung fortgesetzt werden, wobei eine Wechselwirkung zwischen dem Durchführen der Langzeit-Messung und dem Durchführen der Navigator-Messung durch die Verwendung von Licht mit unterschiedlichen Wellenlängen reduziert werden könnte. Damit könnte zum Beispiel in Bezug auf Fluoreszenz-Messungen die Lichtbelastung des Probenobjekts gesenkt werden, ein sog. Bleaching des Probenobjekts kann vermieden werden. Anderweitig ungenutzte Spektralbereiche des Lichts können für die Navigator-Messung verwendet werden. Beispielsweise könnte zum Durchführen der Navigator-Messung infrarotes Licht verwendet werden. Dazu kann ein dedizierte Detektor 102 vorgesehen sein, der verschieden von dem Detektor ist, der für die Langzeit-Messung verwendet wird. In einem Beispiel könnte eine Kamera als Detektor 102 verwendet werden, der auf einem bestimmten Bereich des Sensors der Fluoreszenz-Kamera angebracht ist.

Beim Durchführen der eingebetteten Navigator-Messungen Schritt 9105 kann überprüft werden, ob a-priori Wissen über die Anordnung des Probenobjekts in Bezug auf die Fokusebene vorhanden ist. Da beim Durchführen der Navigator-Messung in Schritt 9105 typischerweise das Durchführen der initialen Navigator-Messungen Schritt 9101 nicht besonders lange zurück liegt, kann diese Überprüfung ergeben, dass a-priori Wissen über die Anordnung des Probenobjekts 1031 in Bezug auf die Fokusebene 1035 vorhanden ist. Dies kann beispielsweise bedeuten, dass bereits eine vergleichsweise belastbare Abschätzung des Abstands des Probenobjekts 1031 in Bezug auf die Fokusebene 1035 vorhanden ist.

Dann können wiederum die verschiedenen in Schritt 9105 verwendeten, gegeneinander beabstandete Beleuchtungsrichtungen 1051, 1052 basierend auf dem Überprüfen, ob a-priori Wissen vorhanden ist, ausgewählt werden. Wenn das a-priori Wissen vorhanden ist, können die Beleuchtungsrichtungen 1051, 1052 mit einem vergleichsweise großen Abstand 1040 zueinander ausgewählt werden. In einem solchen Fall kann nämlich angenommen werden, dass das Probenobjekt 1031 vergleichsweise nah bei der Fokusebene 1035 angeordnet ist, sodass der Abstand 1034 zwischen den Abbildungen 1032, 1033 vergleichsweise klein dimensioniert ist, auch wenn ein großer Abstand 1040 zwischen den Beleuchtungsrichtungen 1051, 1052 gewählt wird. Durch die vergleichsweise große Dimensionierung des Abstands 1040 kann erreicht werden, dass der Abstand zwischen dem Probenobjekt 1031 und der Fokusebene 1035 besonders genau berechnet werden kann.

Anschließend erfolgt in Schritt 9106 beispielsweise eine Fokussierung des Probenobjekts 1031, d.h. der ermittelte Abstand zwischen dem Probenobjekt 1031 und der Fokusebene 1035 wird durch Verstellen des Probenhalters 103 minimiert.

Alternativ oder zusätzlich könnte in Schritt 9106 auch ein anderer Parameter der Langzeit-Messung angepasst werden, z.B. die Position und/oder die Anzahl von verwendeten Schichten wenn eine schichtaufgelöste Langzeit-Messung verwendet wird.

Aus FIG. 15 ist ersichtlich, dass das Fokussieren in Schritt 9106 wiederholt ausgeführt wird. Dies bedeutet, dass in dem Beispiel der FIG. 15 eine Fokus-Verfolgungs-Anwendung implementiert werden kann, bei welcher kontinuierlich sichergestellt wird, dass das Probenobjekt 1031 in der Fokusebene 1035 angeordnet ist. Beispielsweise kann dadurch auch die Z-Position des Probenobjekts während der Langzeit-Messung verfolgt werden. Daraus kann eine Lichtbelastung, welcher das Probenobjekt ausgesetzt wird, reduziert werden.

In manchen Beispielen wäre es möglich, dass eine solche Fokus-Verfolgungs-Anwendung über eine Regelschleife implementiert wird. Dabei könnte der motorisierte Probenhalters 103 mittels der Regelschleife angesteuert werden, wobei die Regelschleife die Anordnung des Probenobjekts in Bezug auf die Fokusebene als Regelgröße berücksichtigt. Die Regelschleife könnte bestrebt sein, den Abstand zwischen dem Probenobjekt und der Fokusebene zu minimieren. Im Zusammenhang mit der Regelschleife wäre es dann möglich, dass die mindestens eine erste Beleuchtungsrichtungen die mindestens eine zweite Beleuchtungsrichtung, die zum Durchführen der Navigator-Messungen Schritt 9105 verwendet werden, aus einer Vielzahl von Kandidaten-Beleuchtungsrichtungen basierend auf eine Regelabweichung der Regelschleife ausgewählt werden. Bei einer großen (kleinen) Regelabweichung könnten beispielsweise solche Beleuchtungsrichtungen ausgewählt werden, die einen kleinen (großen) Abstand 1040 zueinander aufweisen.

In einer anderen Implementierung der Regelschleife könnte beispielsweise die Bewegung der Abbildung des Probenobjekts bei einer Verschiebung der Z-Position berücksichtigt werden. Dann könnte die Z-Position so lange verändert werden, bis sich die Abbildung des Probenobjekts nicht mehr bewegt oder ein Kontrastmaß extremal wird.

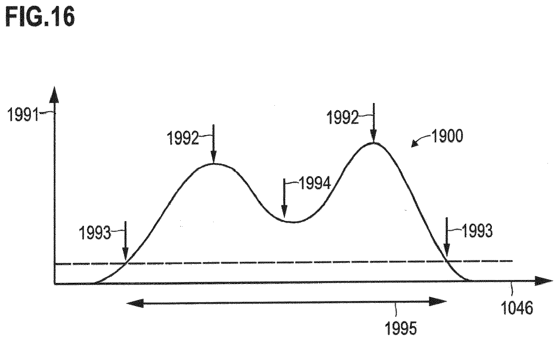

FIG. 16 illustriert Aspekte in Bezug auf ein Maximums 1900 der Korrelation 199. In FIG. 16 ist der Wert 1991 der Korrelation für unterschiedliche Abstände entlang der Richtung 1046 dargestellt.

In FIG. 16 ist ein Beispiel dargestellt, bei welchem das Maximum 1900 zwei Spitzenwerte 1992 aufweist. Beispielsweise könnten die beiden Spitzenwerte 1992 aufgrund des Vorhandenseins von mehreren Probenobjekten oder von in Z-Richtung 1047 ausgedehnten Probenobjekten auftreten. Beispielsweise könnte es daher erstrebenswert sein, bei der Analyse der Korrelation 199 die Breite 1995 des Maximums 1900 etwa durch Ermittlung der Randpunkte 1993 zu bestimmen. Dann könnte die Position des Maximums 1900 definiert sein als der Mittelpunkt 1994 zwischen den Randpunkten 1993. Alternativ könnte die Position des Maximums 1900 auch bestimmt sein durch denjenigen Spitzenwert 1992 mit dem größten Wert 1991 der Korrelation.

Die Breite 1995 des Maximum 1900 könnte beispielsweise auch bei der Bestimmung der Anordnung des Probenobjekts in Bezug auf die Fokusebene berücksichtigt werden. Beispielsweise kann nämlich die Breite 1995 des Maximum 1900 indikativ sein für die Ausdehnung des Probenobjekts entlang der Z-Richtung.

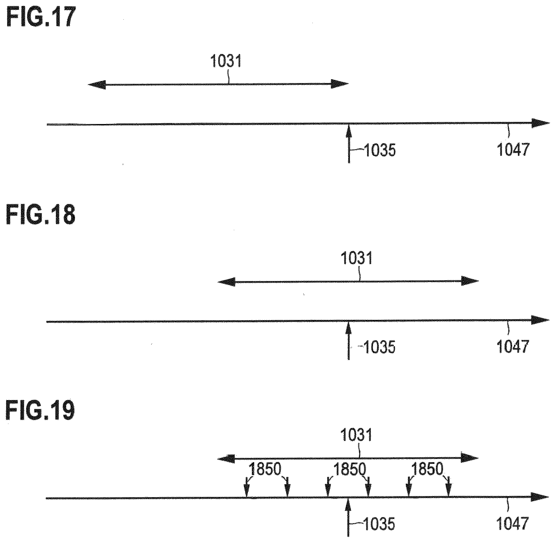

FIGs. 17-19 illustrieren Beispiele in Bezug auf Anwendungen, die durch das Bestimmen der Anordnung des Probenobjekts in Bezug auf die Fokusebene ermöglicht werden können.

FIG. 17 zeigt dabei einen Zustand, bei welchem das Probenobjekt 1031 eine gewisse Ausdehnung entlang der Z-Richtung 1047 aufweist. Das Probenobjekt 1031 ist defokussiert angeordnet, weil es außerhalb der Fokusebene 1035 angeordnet ist. Beispielsweise wäre es möglich, die Ausdehnung des Probenobjekts 1031 entlang der Z-Richtung 1047 basierend auf der Breite 1995 des Maximums 1900 der Korrelation 199 zu bestimmen.

FIG. 18 illustriert einen Zustand, bei welchem das Probenobjekt 1031 fokussiert angeordnet ist. Beispielsweise könnte der motorisierte Probenhalters 103 ausgehend vom Zustand der FIG. 17 angesteuert werden, um das Probenobjekt 1031 in den Zustand gemäß FIG. 18 zu verschieben.

FIG. 19 illustriert die Auswahl von Schichten 1850 eines Schichtstapels basierend auf der bestimmten Ausdehnung des Probenobjekts 1031 senkrecht zur Fokusebene 1035, d.h. entlang der Z-Richtung 1047. Die Position und/oder die Anzahl der Schichten 1850 wird beispielsweise so ausgewählt, dass diese einen gleichmäßigen Abstand zueinander aufweisen und die gesamte Ausdehnung des Probenobjekts 1031 abdecken. Dann könnte, beispielsweise im Rahmen der Langzeit-Messung aus Schritt 9103 des Verfahrens gemäß FIG. 15, eine Bildgebung für jede der Schichten 1850 erfolgen. Zum Beispiel könnte eine Lichtblatt-Fluoreszenz-Bildgebung für die Schichten 1850 durchgeführt werden.

Mittels solcher Techniken kann es möglich sein, dass auch über einen vergleichsweise langen Zeitraum von Minuten oder Stunden oder sogar Tagen, während welchem die entsprechende Langzeit-Messung durchgeführt wird, sichergestellt werden kann, dass Bildgebung für die gesamte Ausdehnung des Probenobjekts 1031 erfolgt. Insbesondere können Formänderungen des Probenobjekts 1031 oder andere Drifts über der Zeit berücksichtigt werden. Außerdem kann dadurch beispielsweise eine Datenreduktion erreicht werden, weil es in einem solchen Fall entbehrlich sein kann, präventiv eine große Anzahl von Schichten 1850 vorzusehen, die auch eine eventuelle Bewegung oder Volumenänderung des Probenobjekts 1031 abdecken. Außerdem kann die Zeitdauer zum Erfassen von Messdaten verringert werden, weil die Anzahl der benötigten Schichten 1850 begrenzt sein kann. Außerdem kann die Lichtexposition des Probenobjekts 1031 reduziert werden, weil die Anzahl der benötigten Schichten 1850 begrenzt ist und nur derjenige Teil beleuchtet wird, der auch tatsächlich beleuchtet werden muss.

Neben der in FIG. 19 illustrierten Anwendung betreffend die Auswahl von Schichten 1850 zur Bildgebung, können auch andere Anwendungen von dem Bestimmen der Ausdehnung des Probenobjekts 1031 entlang der Z-Richtung profitieren. Beispielsweise wäre es möglich, dass eine Benutzerschnittstelle der optischen Vorrichtung 100 geeignet angesteuert wird, so dass der Positionierbereich des Probenhalters 103 basierend auf der Ausdehnung des Probenobjekts 1031 limitiert wird. Dies könnte in anderen Worten bedeuten, dass der Benutzer eine Fokussierung innerhalb der Ausdehnung 1031 und gegebenenfalls auch innerhalb eines entsprechenden Toleranzbereichs vornehmen kann; eine grobe Defokussierung kann aber durch die entsprechende Limitierung vermieden werden.

Eine weitere Anwendung, die von dem Bestimmen der Ausdehnung des Probenobjekts 1031 entlang der Z-Richtung 1047 profitieren kann, wäre beispielsweise die Bestimmung des Volumens des Probenobjekts. Zum Beispiel könnte aus der Ausdehnung parallel zur Z-Richtung 1047 sowie aus der Ausdehnung parallel zu den lateralen Richtungen 1045, 1046 das Volumen des Probenobjekts 1031 bestimmt werden. Die entsprechende Information kann auch im Zusammenhang mit Langzeit-Messungen von Interesse sein. Beispielsweise wäre es möglich, dass derart vollautomatisch Parameter für dreidimensionale Bildgebungstechniken bestimmt werden, sowie die Größe der Aufnahme in Abhängigkeit der Ausdehnung in Z-Richtung 1047 auch entlang der lateralen Richtungen 1045, 1046 angepasst wird. Entsprechende Informationen könnten auch als Metadaten zusammen mit Bilddaten gespeichert werden.

Zusammenfassend wurden voranstehend Techniken beschrieben, mittels welchen eine Anordnung eines Probenobjekts in Bezug auf eine Fokusebene einer optischen Vorrichtung besonders genau berechnet werden kann.

Diese Techniken ermöglichen die Ermittlung der Fokusposition eines stark defokussierten Probenobjekts. Dazu können beispielsweise Beleuchtungsrichtungen zur Beleuchtung des Probenobjekts verwendet werden, die keinen besonders großen Abstand zueinander aufweisen; dadurch wird erreicht, dass die entsprechenden Abbildungen noch von der Apertur des Detektors erfasst werden können.

Eine weitere durch diese Techniken ermöglichte Anwendung betrifft das Halten bzw. geringfügige Nachfokussieren eines grundsätzlich fokussierten Probenobjekts. Dies entspricht einer Fokus-Verfolgungs-Anwendung, manchmal auch als Haltefokusverfahren bezeichnet. Im Gegensatz zu Referenzimplementierungen von Fokus-Verfolgungs-Anwendungen kann eine besonders einfache Hardware-Architektur erreicht werden. Insbesondere kann es entbehrlich sein, eine Strahlteilerplatte in den Strahlengang ein zu koppeln. Es sind also keine zusätzlichen schrägen Platten erforderlich, was insbesondere im Zusammenhang mit der Fluoreszenz-Bildgebung erstrebenswert sein kann, um die Lichteffizienz zu steigern. Insbesondere können also die hierin beschriebenen Techniken einfach in bestehende optische Vorrichtungen integriert werden.

Der Abstand des Probenobjekts zur Fokusebene wird berechnet. Dieser Abstand könnte zum Beispiel als Metadaten zusammen mit entsprechenden Bildern abgespeichert werden. Solche Techniken werden manchmal als quantitative Bildgebung bezeichnet. Die Metadaten könnten zu späteren Korrektur verwendet werden.

Noch eine weitere durch diese Techniken ermöglichte Anwendung betrifft die Ermittlung der Ausdehnung des Probenobjekts für die automatisierte Einstellung von mehreren Schichten eines Schichtstapels bei einer schichtaufgelösten Messung. Der Schichtstapel kann dynamisch angepasst werden, wenn die Probe wächst bzw. sich die Form der Probe ändert.

Manche der hierin beschriebenen Techniken beruhen auf der Verwendung von Mustern umfassend mehrere Beleuchtungsrichtungen. Dabei können unterschiedliche Muster verwendet werden, zum Beispiel eindimensionale Muster. Eindimensionale Muster können zum Beispiel durch mehrere Lichtquellen, die auf einer Linie angeordnet sind, implementiert werden. Optional könnten die verwendeten Muster symmetrisch in Bezug auf die optische Hauptachse der optischen Vorrichtung angeordnet sein. Insbesondere kann es möglich sein, dass sich die verwendeten Muster durch Translation aufeinander abbilden lassen, das heißt dass die verwendeten Muster identisch bis auf eine Verschiebung sind. Der Vergleich entsprechender Abbildungen des Probenobjekts kann dann insbesondere entlang der Richtung der Translation erfolgen. Insbesondere kann diejenige Verschiebung bestimmt werden, welche die zu untersuchendes Struktur am besten beschreibt. Eine laterale Vervielfältigung durch die Muster in der zur Translation senkrechten Richtung kann bei dieser Auswertung ignoriert werden bzw. zur Vergrößerung des Signal-zu-Rauschverhältnisses ausgenutzt werden.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise wurden voranstehend verschiedene Techniken beschrieben, bei denen auf Grundlage eines einzelnen Bilds eine Autokorrelation durchgeführt wird, um die Anordnung des Probenobjekts zu bestimmen. Weitere Techniken wurden beschrieben, bei denen auf Grundlage von zwei Bildern eine Kreuzkorrelation durchgeführt wird, um die Anordnung des Probenobjekts zu bestimmen. Es ist möglich, solche Techniken zu kombinieren. Beispielsweise könnten Beleuchtungsrichtungen entsprechend einem Rechteck angeordnet werden, wobei die langen Seiten des Rechtecks jeweils ein Muster bilden (z.B. könnten die langen Seiten des Rechtecks entlang der Richtung 1045 in den FIGs. orientiert sein). Diese Muster könnten eine Periodizität der verwendeten Lichtquellen entlang der langen Seiten aufweisen. Es wäre möglich, dass die Periodizität strikt ist, d.h. alle Abstände zwischen benachbarten Lichtquellen entlang der langen Seite gleich sind und die Periodizität also nicht mehrere Ortsfrequenzbeiträge aufweist. Es wäre auch möglich, dass Linienmuster verwendet werden; dies bedeutet, dass benachbarte Lichtquellen desselben Musters keinen Versatz entlang der Richtung der kurzen Seiten des Rechtecks aufweisen, sondern lediglich einen Versatz entlang der Richtung der langen Seiten des Rechtecks. Die beiden verwendeten Muster könnten identisch sein. In einem ersten Bild erfolgt die Beleuchtung gemäß dem ersten Muster und in einem zweiten Bild erfolgt die Beleuchtung gemäß dem zweiten Muster. Die beiden Muster können identisch sein und durch Translation entlang der kurzen Seite des Rechtecks ineinander überführt werden. Dann kann aus der eindimensionalen Kreuzkorrelation der zwei Bilder entlang der kurzen Seite des Rechtecks der Abstand des Probenobjekts von der Fokusebene und das Vorzeichen des Abstands bestimmt werden. Gleichzeitig kann eine eindimensionale Autokorrelation im ersten Bild und/oder eine eindimensionale Autokorrelation im zweiten Bild durchgeführt werden, wobei diese Autokorrelationen senkrecht zur Translation entlang der langen Seiten des Rechtecks orientiert sind. Aufgrund der Periodizität kann eine besonders genaue Bestimmung des Abstands des Probenobjekts von der Fokusebene erhalten werden, wobei das Vorzeichen des Abstands aus der Kreuzkorrelation erhalten werden kann.

**Patentansprüche**

1. Verfahren zum Bestimmen einer Anordnung eines Probenobjekts (1031) in einer optischen Vorrichtung (100), das umfasst:

    - Beleuchten des Probenobjekts (1031) aus mindestens einer ersten Beleuchtungsrichtung (1051, 1052),
    - Beleuchten des Probenobjekts (1031) aus mindestens einer zweiten Beleuchtungsrichtung (1051, 1052),
    - Durchführen einer Korrelation (199) zwischen Daten (111, 112, 120, 121, 122), die indikativ für zumindest einen Abschnitt eines Bilds (111, 112, 113) des Probenobjekts (1031) unter Beleuchtung aus der mindestens einen ersten Beleuchtungsrichtung (1051, 1052) sind, und Daten (111, 112, 120, 121, 122), die indikativ für zumindest einen Abschnitt eines Bilds (111, 112, 113) des Probenobjekts (1031) unter Beleuchtung aus der mindestens einen zweiten Beleuchtungsrichtung (1051, 1052) sind,

    **gekennzeichnet durch**

    - Berechnen der Anordnung des Probenobjekts (1031) in Bezug auf eine Fokusebene (1035) der optischen Vorrichtung (100) basierend auf der Korrelation (199) sowie basierend auf einem ersten Winkel, der mit der mindestens einen ersten Beleuchtungsrichtung (1051, 1052) assoziiert ist, sowie einem zweiten Winkel, der mit der mindestens einen zweiten Beleuchtungsrichtung (1051, 1052) assoziiert ist.

2. Verfahren nach Anspruch 1,

    wobei das Beleuchten des Probenobjekts (1031) aus der mindestens einen ersten Beleuchtungsrichtung (1051, 1052) und das Beleuchten des Probenobjekts (1031) aus der mindestens einen zweiten Beleuchtungsrichtung (1051, 1052) zeitparallel durchgeführt wird,
    wobei die Korrelation (199) eine Autokorrelation von Daten (111, 112, 120, 121, 122) ist, die indikativ für zumindest einen Abschnitt eines Bilds (113) des Probenobjekts (1031) unter gemeinsamer Beleuchtung aus der ersten Beleuchtungsrichtung (1051, 1052) und der zweiten Beleuchtungsrichtung (1051, 1052) sind, ist.

3. Verfahren nach Anspruch 1,

    wobei das Beleuchten des Probenobjekts (1031) aus der mindestens einen ersten Beleuchtungsrichtung (1051, 1052) und das Beleuchten des Probenobjekts (1031) aus der mindestens einen zweiten Beleuchtungsrichtung (1051, 1052) zeitsequentiell durchgeführt wird,

wobei die Korrelation (199) eine Kreuzkorrelation zwischen ersten Daten (111, 112, 120, 121, 122), die indikativ für zumindest einen Abschnitt eines ersten Bilds (111, 112) des Probenobjekts (1031) unter Beleuchtung aus der ersten Beleuchtungsrichtung (1051, 1052) sind, und zweiten Daten (111, 112, 120, 121, 122), die indikativ für zumindest einen Abschnitt eines zweiten Bilds (111, 112) des Probenobjekts (1031) unter Beleuchtung aus der zweiten Beleuchtungsrichtung (1051, 1052) sind.

4. Verfahren nach einem der voranstehenden Ansprüche,

wobei das Probenobjekt (1031) zeitparallel mit einer ersten Vielzahl von Beleuchtungsrichtungen (1051, 1052) beleuchtet wird, wobei die erste Vielzahl von Beleuchtungsrichtungen (1051, 1052) in einem ersten Muster (1042, 1042-1, 1042-2) angeordnet ist, und die erste Beleuchtungsrichtung (1051, 1052) umfasst, wobei das Probenobjekt (1031) zeitparallel mit einer zweiten Vielzahl von Beleuchtungsrichtungen (1051, 1052) beleuchtet wird, wobei die zweite Vielzahl von Beleuchtungsrichtungen (1051, 1052) in einem zweiten Muster (1042, 1042-1, 1042-2) angeordnet ist, und die zweite Beleuchtungsrichtung (1051, 1052) umfasst, wobei das erste Muster (1042, 1042-1, 1042-2) durch eine Translation (2041) auf das zweite Muster (1042, 1042-1, 1042-2) abgebildet werden kann.

5. Verfahren nach Anspruch 4,
wobei das erste Muster (1042, 1042-1, 1042-2) eine Ausdehnung (1045A) senkrecht zur Richtung der Translation aufweist, die mindestens doppelt so groß ist, wie die Ausdehnung (1046A) des ersten Musters (1042, 1042-1, 1042-2) parallel zur Richtung der Translation (2041), optional mindestens fünf-fach so groß, weiter optional mindestens zwanzig-fach so groß.

6. Verfahren nach Anspruch 4 oder 5, das weiterhin umfasst:

- Bestimmen der jeweiligen Daten (111, 112, 120, 121, 122), die indikativ für zumindest einen Abschnitt des entsprechenden Bilds (111, 112, 113) sind, basierend auf einer Kombination von Bildpunkten (115) des entsprechenden Bilds (111, 112, 113) entlang einer lateralen Richtung (1045, 1046) senkrecht zur Translation (2041).

7. Verfahren nach einem der voranstehenden Ansprüche,
wobei die Korrelation (199) eine eindimensionale Korrelation (199) entlang einer Verbindungslinie (1040) zwischen der mindestens einen ersten Beleuchtungsrichtung (1051, 1052) und der mindestens einen zweiten Beleuchtungsrichtung (1051, 1052) ist.

8. Verfahren nach einem der voranstehenden Ansprüche, das weiterhin umfasst:

- Durchführen einer Langzeit-Messung mittels der optischen Vorrichtung (100),

wobei das Beleuchten des Probenobjekts (1031) aus der mindestens einen ersten Beleuchtungsrichtung (1051, 1052) und das Beleuchten des Probenobjekts (1031) aus der mindestens einen zweiten Beleuchtungsrichtung (1051, 1052), das Durchführen der Korrelation (199) und das Berechnen der Anordnung des Probenobjekts (1031) wiederholt als mittels Frequenz-Multiplexen und/oder Zeit-Multiplexen in die Langzeit-Messung eingebettete Navigator-Messung durchgeführt wird.

9. Verfahren nach einem der voranstehenden Ansprüche, das weiterhin umfasst:

- Überprüfen, ob a-priori Wissen über die Anordnung des Probenobjekts (1031) in Bezug auf die Fokusebene (1035) vorhanden ist, und
- Auswählen der mindestens einen ersten Beleuchtungsrichtung (1051, 1052) und der mindestens zweiten Beleuchtungsrichtung (1051, 1052) aus einer Vielzahl von Kandidaten-Beleuchtungsrichtungen basierend auf dem Überprüfen, ob a-priori Wissen vorhanden ist.

10. Verfahren nach Anspruch 9,

wobei, falls kein a-priori Wissen vorhanden ist, die erste Beleuchtungsrichtung (1051, 1052) und die zweite Beleuchtungsrichtung (1051, 1052) in einem ersten Abstand zueinander ausgewählt werden, wobei, falls a-priori Wissen vorhanden ist, die erste Beleuchtungsrichtung (1051, 1052) und die zweiten Beleuchtungsrichtung (1051, 1052) in einem zweiten Abstand zueinander ausgewählt wird, wobei der erste Abstand kleiner als der zweite Abstand ist.

**11.** Verfahren nach einem der voranstehenden Ansprüche, das weiterhin umfasst:

- Ansteuern eines motorisierten Probenhalters mittels einer Regelschleife, welche die Anordnung des Probenobjekts (1031) in Bezug auf die Fokusebene (1035) als Regelgröße berücksichtigt.

**12.** Verfahren nach Anspruch 11, das weiterhin umfasst:

- Auswählen der mindestens einen ersten Beleuchtungsrichtung (1051, 1052) und der mindestens einen zweiten Beleuchtungsrichtung (1051, 1052) aus einer Vielzahl von Kandidaten-Beleuchtungsrichtungen basierend auf einer Regelabweichung der Regelschleife.

**13.** Verfahren nach einem der voranstehenden Ansprüche, das weiterhin umfasst:

- Bestimmen einer Ausdehnung des Probenobjekts (1031) senkrecht zur Fokusebene (1035) basierend auf dem Durchführen der Korrelation (199),
- Durchführen einer schichtaufgelösten Messung für mehrere Schichten des Probenobjekts (1031) mittels der optischen Vorrichtung (100), und
- Bestimmen von Position und / oder Anzahl der Schichten basierend auf der bestimmten Ausdehnung des Probenobjekts (1031) senkrecht zur Fokusebene (1035).

**14.** Verfahren nach einem der voranstehenden Ansprüche, das weiterhin umfasst:

- Bestimmen einer Ausdehnung des Probenobjekts (1031) senkrecht zur Fokusebene (1035) basierend auf dem Durchführen der Korrelation (199), und
- Ansteuern einer Benutzerschnittstelle der optischen Vorrichtung (100), um einen Positionierbereich eines Probenhalters der optischen Vorrichtung (100) basierend auf der bestimmten Ausdehnung zu limitieren.

**15.** Optische Vorrichtung (100), die umfasst:

- mindestens eine Recheneinheit (101),
- ein Beleuchtungsmodul (104) mit einer Vielzahl von Lichtquellen (1041), welche eine Vielzahl von Beleuchtungsrichtungen definiere,
- einen Probenhalter (103), der eingerichtet ist, um ein Probenobjekt (1031) zu fixieren,
wobei die mindestens eine Recheneinheit (101) eingerichtet ist, um das Beleuchtungsmodul zum Beleuchten des Probenobjekts (1031) aus mindestens einer ersten Beleuchtungsrichtung (1051, 1052) anzusteuern und um das Beleuchtungsmodul zum Beleuchten des Probenobjekts (1031) aus mindestens einer zweiten Beleuchtungsrichtung (1051, 1052) anzusteuern,
wobei die mindestens eine Recheneinheit (101) weiterhin eingerichtet ist, um eine Korrelation (199) zwischen Daten (111, 112, 120, 121, 122), die indikativ für zumindest einen Abschnitt eines Bilds (111, 112, 113) des Probenobjekts (1031) unter Beleuchtung aus der mindestens einen ersten Beleuchtungsrichtung (1051, 1052) sind, und Daten (111, 112, 120, 121, 122), die indikativ für zumindest einen Abschnitt eines Bilds (111, 112, 113) des Probenobjekts (1031) unter Beleuchtung aus der mindestens einen zweiten Beleuchtungsrichtung (1051, 1052) sind, durchzuführen,
wobei die mindestens eine Recheneinheit (101) weiterhin eingerichtet ist, um eine Anordnung des Probenobjekts (1031) in Bezug auf eine Fokusebene (1035) der optischen Vorrichtung (100) basierend auf der Korrelation (199) sowie basierend auf einem ersten Winkel, der mit der mindestens einen ersten Beleuchtungsrichtung assoziiert ist, sowie einem zweiten Winkel, der mit der mindestens einen zweiten Beleuchtungsrichtung assoziiert ist, zu berechnen.

**Claims**

**1.** Method for determining an arrangement of a sample object (1031) in an optical device (100), comprising:

- illuminating the sample object (1031) from at least one first illumination direction (1051, 1052),

- illuminating the sample object (1031) from at least one second illumination direction (1051, 1052),
- carrying out a correlation (199) between data (111, 112, 120, 121, 122) which are indicative of at least one section of an image (111, 112, 113) of the sample object (1031) under illumination from the at least one first illumination direction (1051, 1052) and data (111, 112, 120, 121, 122) which are indicative of at least one section of an image (111, 112, 113) of the sample object (1031) under illumination from the at least one second illumination direction (1051, 1052),

**characterized by**

- calculating the arrangement of the sample object (1031) in relation to a focal plane (1035) of the optical device (100) on the basis of the correlation (199) and on the basis of a first angle, which is associated with the at least one first illumination direction (1051, 1052), and a second angle, which is associated with the at least one second illumination direction (1051, 1052).

2. Method according to Claim 1,

   wherein illuminating the sample object (1031) from the at least one first illumination direction (1051, 1052) and illuminating the sample object (1031) from the at least one second illumination direction (1051, 1052) are carried out temporally in parallel,
   wherein the correlation (199) is an autocorrelation of data (111, 112, 120, 121, 122) which are indicative of at least one section of an image (113) of the sample object (1031) under joint illumination from the first illumination direction (1051, 1052) and the second illumination direction (1051, 1052).

3. Method according to Claim 1,

   wherein illuminating the sample object (1031) from the at least one first illumination direction (1051, 1052) and illuminating the sample object (1031) from the at least one second illumination direction (1051, 1052) are carried out temporally sequentially,
   wherein the correlation (199) is a cross-correlation between first data (111, 112, 120, 121, 122), which are indicative of at least one section of a first image (111, 112) of the sample object (1031) under illumination from the first illumination direction (1051, 1052), and second data (111, 112, 120, 121, 122), which are indicative of at least one section of a second image (111, 112) of the sample object (1031) under illumination from the second illumination direction (1051, 1052).

4. Method according to any one of the preceding claims, wherein the sample object (1031) is illuminated temporally in parallel with a first multiplicity of illumination directions (1051, 1052), wherein the first multiplicity of illumination directions (1051, 1052) is arranged in a first pattern (1042, 1042-1, 1042-2) and comprises the first illumination direction (1051, 1052), wherein the sample object (1031) is illuminated temporally in parallel with a second multiplicity of illumination directions (1051, 1052), wherein the second multiplicity of illumination directions (1051, 1052) is arranged in a second pattern (1042, 1042-1, 1042-2) and comprises the second illumination direction (1051, 1052), wherein the first pattern (1042, 1042-1, 1042-2) can be mapped onto the second pattern (1042, 1042-1, 1042-2) by means of a translation (2041).

5. Method according to Claim 4,
   wherein the first pattern (1042, 1042-1, 1042-2) has an extent (1045A) perpendicular to the direction of the translation which has a magnitude at least double that of the extent (1046A) of the first pattern (1042, 1042-1, 1042-2) parallel to the direction of the translation (2041), optionally at least five times said magnitude, further optionally at least twenty times said magnitude.

6. Method according to Claim 4 or 5, furthermore comprising:

   - determining the respective data (111, 112, 120, 121, 122) which are indicative of at least one section of the corresponding image (111, 112, 113) on the basis of a combination of pixels (115) of the corresponding image (111, 112, 113) along a lateral direction (1045, 1046) perpendicular to the translation (2041).

7. Method according to any one of the preceding claims, wherein the correlation (199) is a one-dimensional correlation (199) along a connecting line (1040) between the at least one first illumination direction (1051, 1052) and the at least one second illumination direction (1051, 1052).

8. Method according to any one of the preceding claims, furthermore comprising:

   - carrying out a long-term measurement by means of the optical device (100),

   wherein illuminating the sample object (1031) from the at least one first illumination direction (1051, 1052) and illuminating the sample object (1031) from the at least one second illumination direction (1051, 1052), carrying out the correlation (199) and determining the arrangement of the sample object (1031) are carried out repeatedly as a navigator measurement embedded into the long-term measurement by means of frequency division multiplexing and/or time division multiplexing.

9. Method according to any one of the preceding claims, furthermore comprising:

   - checking whether a priori knowledge about the arrangement of the sample object (1031) in relation to the focal plane (1035) is present, and
   - selecting the at least one first illumination direction (1051, 1052) and the at least second illumination direction (1051, 1052) from a multiplicity of candidate illumination directions on the basis of the checking whether a priori knowledge is present.

10. Method according to Claim 9,

    wherein, if no a priori knowledge is present, the first illumination direction (1051, 1052) and the second illumination direction (1051, 1052) are selected at a first distance with respect to one another, wherein, if a priori knowledge is present, the first illumination direction (1051, 1052) and the second illumination direction (1051, 1052) are selected at a second distance with respect to one another,
    wherein the first distance is less than the second distance.

11. Method according to any one of the preceding claims, furthermore comprising:

    - driving a motorized sample holder by means of a control loop which takes account of the arrangement of the sample object (1031) in relation to the focal plane (1035) as a controlled variable.

12. Method according to Claim 11, furthermore comprising:

    - selecting the at least one first illumination direction (1051, 1052) and the at least one second illumination direction (1051, 1052) from a multiplicity of candidate illumination directions on the basis of a control deviation of the control loop.

13. Method according to any one of the preceding claims, furthermore comprising:

    - determining an extent of the sample object (1031) perpendicular to the focal plane (1035) on the basis of carrying out the correlation (199),
    - carrying out a layer-resolved measurement for a plurality of layers of the sample object (1031) by means of the optical device (100), and
    - determining position and/or number of the layers on the basis of the determined extent of the sample object (1031) perpendicular to the focal plane (1035).

14. Method according to any one of the preceding claims, furthermore comprising:

    - determining an extent of the sample object (1031) perpendicular to the focal plane (1035) on the basis of carrying out the correlation (199), and
    - driving a user interface of the optical device (100) in order to limit a positioning range of a sample holder of the optical device (100) on the basis of the determined extent.

15. Optical device (100), comprising:

    - at least one computing unit (101),
    - an illumination module (104) having a multiplicity of light sources (1041), which define a multiplicity of illumination directions,

- a sample holder (103) configured to fix a sample object (1031),

wherein the at least one computing unit (101) is configured to drive the illumination module for illuminating the sample object (1031) from at least one first illumination direction (1051, 1052) and to drive the illumination module for illuminating the sample object (1031) from at least one second illumination direction (1051, 1052),

wherein the at least one computing unit (101) is furthermore configured to carry out a correlation (199) between data (111, 112, 120, 121, 122) which are indicative of at least one section of an image (111, 112, 113) of the sample object (1031) under illumination from the at least one first illumination direction (1051, 1052) and data (111, 112, 120, 121, 122) which are indicative of at least one section of an image (111, 112, 113) of the sample object (1031) under illumination from the at least one second illumination direction (1051, 1052),
wherein the at least one computing unit (101) is furthermore configured to calculate an arrangement of the sample object (1031) in relation to a focal plane (1035) of the optical device (100) on the basis of the correlation (199) and on the basis of a first angle, which is associated with the at least one first illumination direction, and a second angle, which is associated with the at least one second illumination direction.


**Revendications**

1. Procédé de détermination d'un agencement d'un objet échantillon (1031) dans un dispositif optique (100), comprenant :

   - l'éclairage de l'objet échantillon (1031) depuis au moins une première direction d'éclairage (1051, 1052),
   - l'éclairage de l'objet échantillon (1031) depuis au moins une deuxième direction d'éclairage (1051, 1052),
   - l'exécution d'une corrélation (199) entre des données (111, 112, 120, 121, 122) qui sont indicatives d'au moins une partie d'une image (111, 112, 113) de l'objet échantillon (1031) sous un éclairage depuis ladite au moins une première direction d'éclairage (1051, 1052), et des données (111, 112, 120, 121, 122) qui sont indicatives d'au moins une partie d'une image (111, 112, 113) de l'objet échantillon (1031) sous un éclairage depuis ladite au moins une deuxième direction d'éclairage (1051, 1052),

   **caractérisé par**

   - le calcul de l'agencement de l'objet échantillon (1031) par rapport à un plan focal (1035) du dispositif optique (100) sur la base de la corrélation (199) et sur la base d'un premier angle associé à ladite au moins une première direction d'éclairage (1051, 1052) et d'un deuxième angle associé à ladite au moins une deuxième direction d'éclairage (1051, 1052).

2. Procédé selon la revendication 1,
   dans lequel l'éclairage de l'objet échantillon (1031) depuis ladite au moins une première direction d'éclairage (1051, 1052) et l'éclairage de l'objet échantillon (1031) depuis ladite au moins une deuxième direction d'éclairage (1051, 1052) sont effectués en parallèle dans le temps, dans lequel la corrélation (199) est une autocorrélation de données (111, 112, 120, 121, 122) qui sont indicatives d'au moins une partie d'une image (113) de l'objet échantillon (1031) sous un éclairage commun depuis la première direction d'éclairage (1051, 1052) et depuis la deuxième direction d'éclairage (1051, 1052).

3. Procédé selon la revendication 1,

   dans lequel l'éclairage de l'objet échantillon (1031) depuis ladite au moins une première direction d'éclairage (1051, 1052) et l'éclairage de l'objet échantillon (1031) depuis ladite au moins une deuxième direction d'éclairage (1051, 1052) sont effectués de manière séquentielle dans le temps,
   dans lequel la corrélation (199) est une intercorrélation entre des premières données (111, 112, 120, 121, 122) qui sont indicatives d'au moins une partie d'une première image (111, 112) de l'objet échantillon (1031) sous un éclairage depuis la première direction d'éclairage (1051, 1052), et des deuxièmes données (111, 112, 120, 121, 122) qui sont indicatives d'au moins une partie d'une deuxième image (111, 112) de l'objet échantillon (1031) sous un éclairage depuis la deuxième direction d'éclairage (1051, 1052) .

4. Procédé selon l'une des revendications précédentes, dans lequel l'objet échantillon (1031) est éclairé en parallèle dans le temps suivant une première pluralité de directions d'éclairage (1051, 1052), dans lequel la première pluralité de directions d'éclairage (1051, 1052) est agencée selon un premier motif (1042, 1042-1, 1042-2), et comprend la première direction d'éclairage (1051, 1052),

dans lequel l'objet échantillon (1031) est éclairé en parallèle dans le temps suivant une deuxième pluralité de directions d'éclairage (1051, 1052), dans lequel la deuxième pluralité de directions d'éclairage (1051, 1052) est agencée selon un deuxième motif (1042, 1042-1, 1042-2), et comprend la deuxième direction d'éclairage (1051, 1052),

dans lequel l'image du premier motif (1042, 1042-1, 1042-2) peut être formée sur le deuxième motif (1042, 1042-1, 1042-2) par une translation (2041).

5. Procédé selon la revendication 4,
dans lequel le premier motif (1042, 1042-1, 1042-2) présente une étendue (1045A), perpendiculairement à la direction de la translation, qui est au moins deux fois plus grande que l'étendue (1046A) du premier motif (1042, 1042-1, 1042-2) parallèlement à la direction de la translation (2041), de manière facultative au moins cinq fois plus grande, et de manière plus facultative au moins vingt fois plus grande.

6. Procédé selon la revendication 4 ou 5, comprenant en outre :

- la détermination de données (111, 112, 120, 121, 122) respectives qui sont indicatives d'au moins une partie de l'image correspondante (111, 112, 113), sur la base d'une combinaison de pixels (115) de l'image correspondante (111, 112, 113) le long d'une direction latérale (1045, 1046) perpendiculaire à la translation (2041).

7. Procédé selon l'une des revendications précédentes, dans lequel la corrélation (199) est une corrélation unidimensionnelle (199) le long d'une ligne de jonction (1040) entre ladite au moins une première direction d'éclairage (1051, 1052) et ladite au moins une deuxième direction d'éclairage (1051, 1052).

8. Procédé selon l'une des revendications précédentes, comprenant en outre :

- l'exécution d'une mesure de longue durée au moyen du dispositif optique (100),

dans lequel l'éclairage de l'objet échantillon (1031) depuis ladite au moins une première direction d'éclairage (1051, 1052) et l'éclairage de l'objet échantillon (1031) depuis ladite au moins une deuxième direction d'éclairage (1051, 1052), l'exécution de la corrélation (199) et le calcul de l'agencement de l'objet échantillon (1031) sont effectués de manière répétée en tant que mesure de navigateur intégrée dans la mesure de longue durée au moyen de multiplexages fréquentiels et/ou de multiplexages temporels.

9. Procédé selon l'une des revendications précédentes, comprenant en outre :

- le fait de vérifier s'il existe une connaissance a priori de l'agencement de l'objet échantillon (1031) par rapport au plan focal (1035), et
- la sélection de ladite au moins une première direction d'éclairage (1051, 1052) et de ladite au moins une deuxième direction d'éclairage (1051, 1052) parmi une pluralité de directions d'éclairage candidates, sur la base de la vérification de la présence ou non d'une connaissance a priori.

10. Procédé selon la revendication 9,
dans lequel, si aucune connaissance a priori n'est présente, la première direction d'éclairage (1051, 1052) et la deuxième direction d'éclairage (1051, 1052) sont sélectionnées à une première distance l'une de l'autre, dans lequel, si une connaissance a priori est présente, la première direction d'éclairage (1051, 1052) et la deuxième direction d'éclairage (1051, 1052) sont sélectionnées à une deuxième distance l'une de l'autre, dans lequel la première distance est inférieure à la deuxième distance.

11. Procédé selon l'une des revendications précédentes, comprenant en outre :

- la commande d'un porte-échantillon motorisé au moyen d'une boucle de commande qui prend en compte l'agencement de l'objet échantillon (1031) par rapport au plan focal (1035) en tant que grandeur de commande.

12. Procédé selon la revendication 11, comprenant en outre :

- la sélection de ladite au moins une première direction d'éclairage (1051, 1052) et de ladite au moins une deuxième direction d'éclairage (1051, 1052) parmi une pluralité de directions d'éclairage candidates sur la base d'un écart de commande de la boucle de commande.

13. Procédé selon l'une des revendications précédentes, comprenant en outre :

- la détermination d'une étendue de l'objet échantillon (1031) perpendiculairement au plan focal (1035) sur la base de l'exécution de la corrélation (199),
- l'exécution d'une mesure résolue au niveau de la couche pour plusieurs couches de l'objet échantillon (1031) au moyen du dispositif optique (100), et
- la détermination de la position et/ou du nombre de couches sur la base de l'étendue déterminée de l'objet échantillon (1031) perpendiculairement au plan focal (1035).

14. Procédé selon l'une des revendications précédentes, comprenant en outre :

- la détermination d'une étendue de l'objet échantillon (1031) perpendiculairement au plan focal (1035) sur la base de l'exécution de la corrélation (199), et
- la commande d'une interface utilisateur du dispositif optique (100) pour limiter une plage de positions d'un porte-échantillon du dispositif optique (100) sur la base de l'étendue déterminée.

15. Dispositif optique (100) comprenant :

- au moins une unité de calcul (101),
- un module d'éclairage (104) comprenant une pluralité de sources lumineuses (1041) définissant une pluralité de directions d'éclairage,
- un porte-échantillon (103) conçu pour fixer un objet échantillon (1031),

dans lequel ladite au moins une unité de calcul (101) est conçue pour commander le module d'éclairage afin d'éclairer l'objet d'échantillon (1031) depuis au moins une première direction d'éclairage (1051, 1052) et pour commander le module d'éclairage afin d'éclairer l'objet d'échantillon (1031) depuis au moins une deuxième direction d'éclairage (1051, 1052),

dans lequel ladite au moins une unité de calcul (101) est en outre conçue pour exécuter une corrélation (199) entre des données (111, 112, 120, 121, 122) qui sont indicatives d'au moins une partie d'une image (111, 112, 113) de l'objet échantillon (1031) sous un éclairage depuis ladite au moins une première direction d'éclairage (1051, 1052), et des données (111, 112, 120, 121, 122) qui sont indicatives d'au moins une partie d'une image (111, 112, 113) de l'objet échantillon (1031) sous un éclairage depuis ladite au moins une deuxième direction d'éclairage (1051, 1052),

dans lequel ladite au moins une unité de calcul (101) est en outre conçue pour calculer un agencement de l'objet échantillon (1031) par rapport à un plan focal (1035) du dispositif optique (100) sur la base de la corrélation (199) et sur la base d'un premier angle associé à ladite au moins une première direction d'éclairage et d'un deuxième angle associé à ladite au moins une deuxième direction d'éclairage.

FIG. 1

## FIG. 2

| Beleuchten aus erster Beleuchtungsrichtung | 9001 |

↓

| Beleuchten aus zweiter Beleuchtungsrichtung | 9002 |

↓

| Vergleiche Daten, die indikativ für zumindest einen Abschnitt eines Bilds bei Beleuchtung aus der ersten Beleuchtungsrichtung sind mit Daten, die indikativ für zumindest einen Abschnitt eines Bilds bei Beleuchtung aus der zweiten Beleuchtungsrichtung sind | 9003 |

↓

| Bestimme Ausdehnung und/oder Position des Probenobjekts in Bezug zu Fokusebene | 9004 |

FIG. 3

# FIG. 4

## FIG. 5

111

112

1032

1033

## FIG. 6

113    1033

1032

**FIG. 7**

**FIG. 8**

Fig. 9

FIG. 10

## FIG. 11

# FIG. 12

FIG.13

## Fig. 14

# FIG. 15

Durchführen initiale Navigator-Messung — 9101

Fokussieren — 9102

Durchführen Messung — 9103

Navigator benötigt? — 9104 — NEIN

JA

Durchführen Navigator-Messung — 9105

Fokussieren und/oder Anpassung Messung — 9106

FIG.16

**FIG.17**

**FIG.18**

**FIG.19**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014109687 A1
- DE 102009012248 A1

- DE 202013012338 U1